# FASCICULE DE BREVET EUROPEEN

(11) **EP 1 495 076 B1**
(45) Date de publication et mention de la délivrance du brevet: **12.08.2009**
(21) Numéro de dépôt: 03746336.1
(22) Date de dépôt: 11.04.2003
(51) Int. Cl.: C08L 83/04, B29C 33/64, C10M 173/02, C08J 3/03

(54) **COMPOSITION A BASE DE SILOXANE, NE DEGAGEANT PAS D HYDROGENE, DESTINEE AU MOULAGE-DEMOULAGE DE PNEUMATIQUES**
KEINEN WASSERSTOFF FREISETZENDE SILOXANZUSAMMENSETZUNG ZUM FORMEN/ENTFORMEN VON REIFEN
SILOXANE COMPOSITION NOT RELEASING HYDROGEN FOR THE MOULDING/DEMOULDING OF TYRES

(30) Priorité: 12.04.2002 FR 0204633; 25.11.2002 FR 0214757
(43) Date de publication de la demande: 12.01.2005
(73) Titulaire: Bluestar Silicones France, 69486 Lyon (FR)
(72) Inventeur: GUICHARD, Gérald, F-69700 Givors (FR); HAWKINS, Ian, Northumberland NE45 5JG Angleterre (GB); MARTIN, Nadia, F-69006 Lyon (FR); MONTARNAL, Serge, F-01800 Bourg St-Christophe (FR)
(86) Numéro de dépôt international: PCT/FR2003/001151
(87) Numéro de publication internationale: WO 2003/087227

(56) Documents cités:
- EP-A- 0 399 526
- EP-A- 0 635 559
- WO-A-01/40417
- WO-A-01/44416
- WO-A-02/094971
- FR-A- 2 494 294

## Description

La présente invention concerne des compositions sous forme d'émulsion d'huile silicone destinées à être appliquées sur les vessies de vulcanisation et/ou sur les bandages pneumatiques ou semi-pneumatiques, pour faciliter le moulage-démoulage lors de la fabrication de pneumatiques.

L'invention concerne en particulier une application en tant que composition lubrifiante particulièrement appropriée à la lubrification des vessies de vulcanisation utilisées lors du façonnage et de la vulcanisation de bandages pneumatiques ou semi-pneumatiques.

L'invention concerne aussi une application en tant que primaire d'accrochage.

L'invention concerne également les vessies de vulcanisation revêtues d'une composition lubrifiante et/ou d'un primaire d'accrochage selon l'invention ansi que les bandages pneumatiques ou semi-pneumatiques revêtus de ladite composition lubrifiante.

Selon deux autres de ses aspects, l'invention concerne un procédé de préparation des compositions lubrifiantes de l'invention ainsi que l'utilisation desdites compositions lubrifiantes pour la lubrification des vessies de vulcanisation.

Les pneumatiques en caoutchouc pour véhicules sont habituellement fabriqués en moulant et en vulcanisant une enveloppe crue, ou non vulcanisée et non façonnée, dans une presse de moulage dans laquelle l'enveloppe crue est pressée vers l'extérieur contre la surface d'un moule au moyen d'une vessie dilatable par un fluide interne. Par ce procédé, l'enveloppe crue est façonnée contre la surface externe du moule qui définit le dessin de la bande de roulement de l'enveloppe et la configuration des flancs. Par chauffage, l'enveloppe est vulcanisée. En général, la vessie est dilatée par la pression interne fournie par un fluide tel qu'un gaz chaud, de l'eau chaude et/ou de la vapeur, qui participe lui aussi au transfert de chaleur pour la vulcanisation. On laisse alors l'enveloppe refroidir un peu dans le moule, ce refroidissement étant parfois favorisé par l'introduction d'eau froide ou plus fraîche dans la vessie. Puis on ouvre le moule, on dégonfle la vessie en relâchant la pression du fluide interne et on retire l'enveloppe du moule à enveloppes. Cette utilisation des vessies de vulcanisation des enveloppes est bien connue dans la technique.

II est admis qu'il se produit un mouvement relatif notable entre la surface de contact externe de la vessie et la surface interne de l'enveloppe au cours de la phase de dilatation de la vessie avant la vulcanisation complète de l'enveloppe. De même, il se produit également un mouvement relatif considérable entre la surface de contact externe de la vessie et la surface interne vulcanisée de l'enveloppe, après que l'enveloppe a été moulée et vulcanisée, au cours du dégonflement et de l'extraction de la vessie du pneumatique.

Si une lubrification adéquate n'est pas prévue entre la vessie et la surface interne de l'enveloppe, la vessie a généralement tendance à se gondoler, ce qui entraîne une déformation de l'enveloppe dans le moule et aussi une usure et un dépolissage excessifs de la surface de la vessie elle-même. La surface de la vessie tend également à coller sur la surface interne de l'enveloppe après la vulcanisation de l'enveloppe et au cours de la partie du cycle de vulcanisation de l'enveloppe au cours de laquelle la vessie est dégonflée. En outre, des bulles d'air peuvent être emprisonnées entre les surfaces de la vessie et de l'enveloppe, et favoriser l'apparition de défauts de vulcanisation des enveloppes résultant d'un transfert de chaleur inadéquat.

Pour cette raison, la surface externe de la vessie ou la surface interne de l'enveloppe crue ou non vulcanisée est revêtue d'un lubrifiant approprié, parfois désigné sous le nom de "ciment de chemisage".

De nombreuses compositions de lubrifiant ont été proposées à cet effet dans la technique.

On connaît notamment les compositions lubrifiantes décrites dans FR 2 494 294, lesquelles contiennent, à titre de constituants principaux, un polydiméthylsiloxane réactif présentant de préférence des groupes terminaux hydroxyle, un agent réticulant comprenant de préférence des fonctions Si-H et éventuellement un catalyseur de polycondensation.

Des exemples d'agent réticulant à fonction(s) Si-H sont le méthylhydrogénosilane, le diméthylhydrogénosilane et le polyméthylhydrogénosilane. L'inconvénient des compositions lubrifiantes de ce type est leur instabilité au stockage. On constate en effet un crémage de l'émulsion suite au dégagement d'hydrogène pendant le transport et la conservation de la composition lubrifiante. Le dégagement d'hydrogène responsable de l'instabilité des compositions de l'art antérieur résulte essentiellement de la décomposition des constituants à fonction(s) Si-H.

La préparation de compositions lubrifiantes à partir de constituants ne comprenant pas la fonction Si-H, et présentant au demeurant d'excellentes propriétés de durabilité, de lubrification et d'élasticité est donc fortement souhaitable.

Les compositions faisant l'objet de EP-A-635 559 sont des compositions lubrifiantes à base de siloxane répondant en partie à ces exigences. Ces compositions sont notamment plus stables en ce qu'elles ne dégagent pas d'hydrogène en cours de stockage.

Ces compositions, qui se présentent sous la forme d'émulsions, comprennent à titre de constituants essentiels, un polydiméthylsiloxane non réactif, un polydiméthylsiloxane réactif, de préférence à terminaison hydroxy ou alcoxy et un agent réticulant. Leur durabilité est cependant insuffisante pour une utilisation pratique dans la production de bandages pneumatiques ou semi-pneumatiques.

WO-A-01 40417 décrit une composition lubrifiante, sous forme d'émulsion huile dans eau, à base de siloxane et ne dégageant pas d'hydrogène, comprenant :
(a) une huile polydiorganosiloxane non réactive aux propriétés lubrifiantes présentant une viscosité dynamique de l'ordre de 5.10⁻² à 30.10² Pa.s à 25° C ;
(b) une résine polyorganosiloxane porteuse, avant émulsification, des substituants hydroxyles condensables et au moins deux motifs siloxyles différents choisis parmi ceux de formule (R⁰)₃SiO_{1/2}(M) ; (R⁰)₂SiO_{2/2}(D) ; R⁰SiO3_{/2}(T) et SiO_{4/2} (Q), l'un au moins de ces motifs étant un motif T ou Q, formules dans lesquelles R⁰ représente un substituant organique monovalent, le nombre de moyen par molécule de radicaux organiques R⁰ pour un atome de silicium étant compris entre 1 et 2 ; et ladite résine présentant une teneur pondérale en substituants hydroxyles comprise entre 0,1 et 10 % en poids, et, de préférence entre 0,2 et 5 % en poids ;
(c) un réticulant soluble dans la phase silicone comprenant au moins deux fonctions capables de réagir avec la résine polyorganosiloxane (b) ;
(d) un catalyseur de condensation capable de catalyser la réaction du constituant (b) avec le constituant (c) ;
(e) un tensioactif ; et
(f) de l'eau,
ladite composition comprenant de 5 à 95 parties en poids du constituant (a), de 0,5 à 50 parties en poids du constituant (b), de 0,1 à 20 parties en poids du constituant (c), de 0,05 à 10 parties en poids du constituant (d), pour 100 parties en poids de la somme des constituants (a) + (b) + (c) + (d).

Dans ces compositions, l'huile non réactive (a) est un homopolymère ou copolymère linéaire comportant des groupes organiques choisis parmi alkyle, alcényle, aryle, cycloalkyle, cycloalcényle, aralkyle et alkaryle. Les huiles (a) préférées sont les polydiméthylsiloxanes linéaires à motifs récurrents (CH₃)₂SiO_{2/2} et présentant à leurs extrémités des motifs (CH₃)₃SiO_{1/2}.

WO-A-01 40417 prévoit aussi qu'il est possible d'ajouter, à cette composition lubrifiante, une huile polydiorganosiloxane linéaire réactive présentant au moins deux groupements OH par molécule et ayant une viscosité dynamique à 25° C comprise entre 5.10⁻² et 30.10² Pa.s. Cette huile réactive peut être alors présente dans une très large gamme de valeurs, à savoir à raison de 0,5 à 30 % en poids, de préférence de 1 à 10 % en poids, par rapport au poids total de la composition lubrifiante.

Les compositions lubrifiantes à base de polydiméthylsiloxane linéaire décrites dans WO-A-01 40417 constituent une amélioration par rapport à EP-A-635 559. Il est toutefois souhaitable d'améliorer encore les propriétés de glissement et la durabilité des compositions lubrifiantes.

Usuellement, les vessies dilatables, avant d'être enduites, sur leur surface externe (celle qui vient au contact du bandage) d'une composition lubrifiante, peuvent subir un pré-traitement consistant à appliquer une couche régulière d'une composition dite primaire ou encore primaire d'accrochage.

**II** est également utile de développer des primaires ayant de bonnes propriétés d'accrochage et une bonne compatibilité avec les compositions lubrifiantes utilisées.

La présente invention a donc pour objectif de proposer des compositions lubrifiantes améliorées ne dégageant pas d'hydrogène et présentant de surcroît d'excellentes caractéristiques de glissement et de durabilité, ce qui les rend parfaitement appropriées à la lubrification des vessies utilisées lors de la vulcanisation des bandages pneumatiques et semi-pneumatiques.

Elle a également pour objectif de proposer des compositions servant de primaire d'accrochage.

De manière générale, l'invention a pour objet une composition sous forme d'émulsion huile silicone dans eau, à base de siloxane qui ne dégage pas d'hydrogène, susceptible d'être utilisée dans le moulage-démoulage de pneumatiques. Cette composition comprend plus précisément les constituants (a), (a'), (b), (c), (d), (e), (f) suivants :
(a) éventuellement au moins une huile polyorganosiloxane linéaire non réactive aux propriétés lubrifiantes, présentant une viscosité dynamique de l'ordre de 5.10⁻² à 30.10² Pa.s à 25°C et consistant dans un homopolymère ou copolymère linéaire :
   - dont, par molécule, les substituants organiques monovalents, identiques ou différents entre eux, liés aux atomes de silicium sont choisis parmi les radicaux alkyles, cycoalkyles, alcényles, aryles, alkylarylènes et arylalkylènes, des radicaux aryles, alkylarylènes et/ou arylalkylènes étant de préférence présents
   - et, de manière plus préférée, dont, par molécule, au moins 1 ou 2 %, notamment de 5 à 50 %, mieux de 8 à 35 %, en nombre desdits substituants organiques monovalents liés aux atomes de silicium sont des radicaux aryles, alkylarylènes et/ou arylalkylènes ;
      (a') au moins une huile polyorganosiloxane linéaire réactive comportant au moins deux groupements OH par molécule et présentant une viscosité dynamique allant de 5.10⁻² à 200 000, notamment de 5.10⁻² à 150 000, de préférence de 5.10⁻² à 30.10² Pa.s à 25°C ;
      (b) au moins une résine polyorganosiloxane porteuse de substituants hydroxyles condensables et comportant au moins deux motifs siloxyles différents choisis parmi ceux de formule (R¹)₃SiO_{1/2} (M) ; (R¹)₂SiO_{1/2}(D) ; R¹SiO_{3/2} (T) et SiO_{4/2} (Q), l'un au moins de ces motifs étant un motif T ou Q, formules dans lesquelles R¹ représente un substituant organique monovalent, le nombre moyen par molécule de radicaux organiques R¹ pour un atome de silicium étant compris entre 1 et 2 ; et ladite résine présentant une teneur pondérale en substituants hydroxyles comprise avantageusement entre 0,1 et 10% en poids, et, de préférence entre 0,2 et 5% en poids ;
      (c) au moins un réticulant soluble dans la phase silicone comprenant au moins deux fonctions capables de réagir avec la résine polyorganosiloxane (b) ;
      (d) au moins un catalyseur de condensation capable de catalyser la réaction du constituant (b) avec le constituant (c) ;
      (e) au moins un tensioactif ; et
      (f) de l'eau,
   les quantités de tensioactif(s) et d'eau étant suffisantes pour l'obtention d'une émulsion huile-dans-eau,
   le rapport pondéral constituant (a)/constituant (a') se situant dans l'intervalle allant de 0 à 10, notamment de 0 à 9, et les constituants (a) et (a') et plus généralement (a), (a'), (b) et (c) étant mélangés entre eux avant mise en émulsion.

Lorsque la composition comporte peu ou pas d'huile non réactive (a), elle développe plutôt des propriétés de primaire d'accrochage après chauffage et réticulation sur son support. Pour des quantités relatives supérieures de constituant (a), la composition développe des propriétés lubrifiantes. Sans vouloir être lié à la théorie, on pense qu'après réticulation de la composition sur son support, la composition développe des propriétés lubrifiantes du fait de la présence en quantité suffisante d'huile non réticulée (a). De manière générale, on estime qu'un ratio (a)/(a') compris entre 0 et 1, notamment entre 0 et 0,7 définit un primaire d'accrochage, alors qu'un ratio compris entre 1,5 et 10 définit plutôt une composition lubrifiante. L'intervalle entre 1 et 1,5 correspond à des propriétés moins tranchées, que l'homme du métier peut évaluer et mettre à profit dans l'activité moulage-démoulage, en tant que primaire ou lubrifiant, selon les cas.

Suivant un premier mode de réalisation, la composition, notamment composition lubrifiante, est telle que le rapport pondéral (a)/(a') se situe dans l'intervalle allant de 1,5 à 10, notamment de 1,5 à 9, de préférence de 2 à 6, de manière plus préférée de 3 à 5, mieux encore de 3,5 à 4,5.

Les constituants (a), (a'), (b), (c), (d) et (e) de l'émulsion sont définis en référence à leur structure chimique initiale, c'est-à-dire celle qui les caractérise avant émulsification. Dès lors qu'ils sont en milieu aqueux, leur structure est susceptible d'être grandement modifiée suite aux réactions d'hydrolyse et de condensation.

Par viscosité dynamique, on entend dans le cadre de l'invention la viscosité de type Newtonienne, c'est-à-dire la viscosité dynamique, mesurée de manière connue en soi à une température donnée, à un gradient de vitesse de cisaillement suffisamment faible pour que la viscosité mesurée soit indépendante du gradient de vitesse.

De préférence, la composition lubrifiante selon l'invention comprend :
- de 55 à 98,85 parties en poids de la somme des constituants (a) + (a') ;
- de 1 à 30 parties en poids du constituant (b),
- de 0,1 à 10 parties en poids du constituant (c),
- de 0,05 à 5 parties en poids du constituant (d),
pour 100 parties en poids de la somme des constituants (a) + (a') + (b) + (c) + (d).

Chacune des huiles polydiorganosiloxanes non réactives du constituant (a) présente une viscosité dynamique généralement comprise entre 5.10⁻² et 30.10² Pa.s à 25° C. De préférence, la viscosité dynamique varie entre 5.10⁻² et 30 Pa.s, mieux encore entre 5.10⁻² et 5 Pa.s.

Dans le cadre de l'invention, on entend par "non réactive" une huile qui dans les conditions d'émulsification, de préparation de la composition lubrifiante et d'utilisation, ne réagit chimiquement avec aucun des constituants de la composition.

A titre de constituant (a) préféré, on peut citer les polyorganosiloxanes linéaires :
- constitués le long de chaque chaîne :
   - des motifs de formule R²R³SiO_{2/2}, éventuellement associés à des motifs de formule (R²)₂SiO_{2/2},
   - des motifs de formule (R³)₂SiO_{1/2} éventuellement associés à des motifs de formule (R²)₂SiO_{2/2} ,
   - des motifs de formule R²R³SiO_{2/2} et des motifs de formule (R³)₂SiO_{2/2}, éventuellement associés à des motifs de formule (R²)₂SiO_{2/2} ,
- et bloqués à chaque extrémité de chaîne par un motif de formule (R⁴hSiO_{1/2} dont les radicaux R⁴, identiques ou différents, sont choisis parmi des radicaux R² et R³ ;
- où les radicaux R² et R³ substituants organiques monovalents des divers motifs siloxyles mentionnés supra, ont les définitions suivantes :
   - les radicaux R², identiques ou différents entre eux, sont choisis parmi : les radicaux alkyles linéaires ou ramifiés en C₁-C₆. (tels que par exemple méthyle, éthyle, propyle, isopropyle, butyle, isobutyle, t-butyle, n-pentyle, n-hexyle), les radicaux cycloalkyles en C₃-C₈ (tels que par exemple cyclopentyle, cyclohexyle), et les radicaux alcényles linéaires ou ramifiés en C₂-C₈ (tels que par exemple vinyle, allyle),
   - les radicaux R³, identiques ou différents entre eux, sont choisis parmi : les radicaux aryles en C₆-C₁₀ (tels que par exemple phényle, naphtyle), les radicaux alkylarylènes en C₆-C₁₅ (tels que par exemple tolyles, xylyle), les radicaux arylalkylènes en C₆-C₁₅ (tels que par exemple benzyle) ; et
- où au moins 1 ou 2%, notamment de 5 à 50 %, et mieux de 8 à 35 %, en nombre des substituants R², R³ et R⁴ sont des radicaux aromatiques R³.

La présence dans le (ou les) polyorganosiloxane(s) formant le constituant (a), en mélange avec les motifs siloxyles conformes mentionnés supra, de motifs de structure différente, par exemple de formule R⁴SiO_{3/2} et/ou SiO_{4/2} n'est pas exclue dans la proportion d'au plus 2 % (ce % exprimant le nombre de motifs R⁴SiO_{3/2} et/ou SiO_{4/2} pour 100 atomes de silicium).

De manière plus préférée, le constituant (a) consiste dans au moins un polyorganosiloxane linéaire :
- constitué le long de chaque chaîne :
   - des motifs de formule R²R³SiO_{2/2} associés à des motifs de formule (R ²)₂SiO_{2/2},
   - des motifs de formule (R³)₂SiO_{2/2} associés à des motifs de formule (R²)₂SiO_{2/2};
- et bloqués à chaque extrémité de chaîne par un motif de formule (R²)₃SiO_{1/2},
- où les radicaux R² et R³ ont les définitions suivantes :
   - les radicaux R², identiques ou différents entre eux, sont choisis parmi les radicaux méthyle, éthyle, propyle et isopropyle,
   - les radicaux R³ identiques ou différents entre eux, sont choisis parmi les radicaux phényle, tolyles et benzyle ; et
- où au moins 1 ou 2 %, notamment de 5 à 50 %, et mieux 8 à 35 %, en nombre des substituants R² et R³ sont des radicaux phényle, tolyles et/ou benzyle.

De manière avantageuse, on met en oeuvre comme constituant (a) au moins un polyorganosiloxane linéaire ayant, par molécule, un rapport (en nombre) substituants aromatiques R³/Si au moins égal à 0,04, de préférence allant de 0,09 à 1 et mieux allant de 0,16 à 0,7.

Suivant une modalité de l'invention, chacune des huiles polydiorganosiloxanes linéaires réactives du constituant (a') présentant au moins deux groupements OH par molécule, possède une viscosité dynamique à 25° C généralement comprise entre 5.10⁻² et 30.10² Pa.s. De préférence, la viscosité varie entre 5.10⁻² et 30 Pa.s, mieux encore entre 0,1 et 5 Pa.s.

Dans le cadre de l'invention, le terme "réactive" désigne la réactivité du constituant (a') vis-à-vis des agents de réticulation (c) et/ou (g) présents dans l'émulsion; le constituant (g) optionnel sera défini plus loin.

De préférence, le constituant (a') réagit avec l'agent de réticulation dans les conditions de préparation de l'émulsion.

Les substituants organiques monovalents de l'huile (a') sont : des radicaux alkyles linéaires ou ramifiés ; des radicaux alcényles linéaires ou ramifiés ; des radicaux cycloalkyles ou cycloalcényles ; des radicaux cycloalkylalkylènes ou cycloalcénylalkylènes ; ces radicaux sont éventuellement substitués par des groupements -OH et/ou amino (éventuellement substitué) et/ou halogène et/ou cyano. Le substituant du groupement amino peut être un radical alkyle, un radical cycloalkyle ou un radical cycloalkylalkylène.

A titre d'halogène on peut mentionner le chlore, le fluor, le brome ou l'iode, le fluor étant plus spécifiquement approprié.

De façon avantageuse, les substituants organiques de l'huile (a') ou des huiles (a') sont : des radicaux alkyles en C₁-C₆ cycloalkyles en C₃-C₈ ; alcényles en C₂-C₈ ; ou cycloalcényle en C₅-C₈ lesdits radicaux éventuellement substitués par hydroxyle et/ou amino (éventuellement substitué), et/ou halogéno, et/ou cyano.

Les substituants du groupe amino sont par exemple : (C₁-C₆)aikyle ; (C₂-C₈)alcényle ; (C₃-C₈)cycloalkyle.

A titre de constituant (a') préféré, on peut citer les polyorganosiloxanes linéaires de formule : 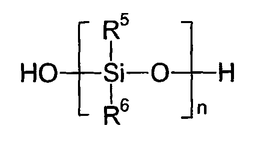 dans laquelle n est un entier supérieur ou égal à 10, R⁵ et R⁶, identiques ou différents, représentent : (C₁-C₆)alkyle ; (C₃-C₈)cycloalkyle ; (C₂-C₈)alcényle ; (C₅-C₈)cycloalcényle ; chacun des radicaux précités étant éventuellement substitué par un atome d'halogène (et de préférence le fluor) ou un reste cyano.

Les huiles du constituant (a') les plus utilisées, du fait de leur disponibilité dans les produits industriels, sont celles pour lesquelles R⁵ et R⁶ sont indépendamment choisis parmi méthyle, éthyle, propyle, isopropyle, cyclohexyle, vinyle et 3,3,3-trifluoropropyle. De manière très préférée, au moins environ 80% en nombre de ces radicaux sont des radicaux méthyle.

En pratique, on privilégiera, en tant qu'huile(s) (a'), les a@w-dihydroxypolydiméthylsiloxanes, et en particulier les huiles de ce type préparées par le procédé de polymérisation anionique décrit dans les brevets américains précités : US-A-2 891 920 et surtout US-A-3 294 725 (cités comme référence).

Le constituant (b) est formé d'au moins une résine polyorganosiloxane, porteuse avant émulsification de groupes hydroxyles condensables.

Dans les motifs constitutifs de ces résines, chaque substituant R¹ représente un groupe organique monovalent.

De façon générale, R¹ est un radical hydrocarboné en C₁-C₂₀ portant éventuellement un ou plusieurs substituants.

Des exemples de radicaux hydrocarbonés sont : un radical alkyle, linéaire ou ramifié, ayant de 1 à 6 atomes de carbone ; un radical alcényle, linéaire ou ramifié, ayant de 2 à 8 atomes de carbone ; un radical cycloalkyle ayant de 3 à 8 atomes de carbone ; ou un radical cycloalcényle ayant de 5 à 8 atomes de carbone.

Les substituants du radical hydrocarboné peuvent être des groupes -OR' ou -O-CO-R' dans lesquels R' est un radical hydrocarboné tel que défini ci-dessus pour R¹, non substitué.

D'autres substituants du radical hydrocarboné peuvent être des fonctions aminées, amidées, époxydées ou uréido.

A titre d'exemple de substituants du radical hydrocarboné, on compte les fonctions aminées de formule :
- -Rₐ-NR⁷R⁸ dans laquelle :
   Rₐ représente un lien valentiel ou représente un radical divalent alkylène, linéaire ou ramifié, en C₁-C₁₀ ;
   et R⁷ et R³ représentent indépendamment : H ; un radical (C₁-C₆) alkyle ; un radical (C₃-C₈)cycloalkyle ; ou un radical (C₆-C₁₀)aryle ;
- -R_{b}-NH-R_{c}-NR⁷R⁸ dans laquelle R_{b} et R_{c}, identiques ou différents, sont tels que définis pour Rₐ ci-dessus ; et R⁷ et R³ sont tels que définis ci-dessus ;
- la fonction de formule : 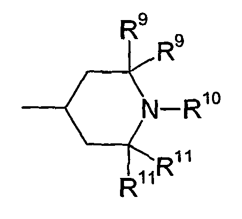 dans laquelle R⁹ et R¹¹, identiques ou différents représentent :
   (C₁-C₃)alkyle et par exemple méthyle ; ou (C₆-C₁₀)aryle et par exemple phényle ;
   R¹⁰ représente : un atome d'hydrogène ; (C₁-C₆)alkyle, par exemple méthyle ; (C₂-C₇)alkylcarbonyle ; (C₆-C₁₀)aryle et par exemple phényle ;
   (C₆-C₁₀)arYl-(C₁-C₆)alkylène et par exemple benzyle ; ou bien encore R¹⁰ représente O ; et
- la fonction de formule : 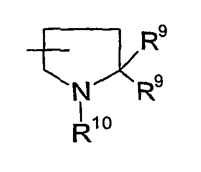
dans laquelle R⁹ et R¹⁰ sont tels que définis ci-dessus.

Il est cependant préférable que la concentration en fonctions -OR', -O-COR', aminées, amidées, epoxydées ou uréido, lorsqu'elles sont présentes dans la résine, soit limitée, de façon à ne pas dépasser le seuil de tolérance au-delà duquel la stabilité de l'émulsion serait compromise.

Les résines silicones (b) sont des polymères organopolysiloxanes ramifiés bien connus et dont les procédés de préparation sont décrits dans de nombreux brevets. Comme exemples concrets de résines utilisables, on peut citer les résines MQ, MDQ, DQ, DT et MDT hydroxylées et dés mélanges de celles-ci. Dans ces résines, chaque groupement OH est porté par un atome de silicium appartenant à un motif M, D ou T.

De préférence, comme exemples de résines utilisables, on peut citer les résines organopolysiloxanes hydroxylées ne comprenant pas, dans leur structure, de motif Q. De manière plus préférentielle, on peut citer les résines DT et MDT hydroxylées comprenant au moins 20% en poids de motifs T et ayant une teneur pondérale en groupement hydroxyle allant de 0,1 à 10% et, mieux, de 0,2 à 5%. Dans ce groupe de résines plus préférentielles, celles où le nombre moyen de substituants R¹ pour un atome de silicium est compris, par molécule, entre 1,2 et 1,8, conviennent plus particulièrement. De manière encore plus avantageuse, on utilise des résines de ce type, dans la structure desquelles au moins 80% en nombre des substituants R¹ sont des radicaux méthyle.

La résine (b) est liquide à température ambiante. De manière préférée, la résine présente une viscosité dynamique à 25° C comprise entre 0,2 et 200 Pa.s notamment entre 0,5 et 50 Pa.s, mieux encore entre 0,8 et 5 Pa.s.

La résine est incorporée dans les émulsions à raison de 1 à 30 parties en poids pour cent parties en poids de la somme des constituants (a), (a'), (b), (c) et (d), de préférence à raison de 3 à 20, mieux de 5 à 15 parties en poids.

Le constituant (c) consistant dans au moins un réticulant soluble dans la phase silicone comprend au moins deux fonctions capables de réagir avec la (ou les) résine(s) (b) de façon à provoquer une réticulation de la (ou des) résine(s). De manière avantageuse, lesdites fonctions réactives du réticulant réagissent avec la résine dans les conditions de préparation de l'émulsion.

A titre de constituant (c) préféré, on peut citer les réticulants de formule :

YₐSi(Zi)₄₋ₐ

dans laquelle :
- a est 0, 1 ou 2 ;
- Y est un groupe monovalent organique ; et
- les groupes Zi, identiques ou différents, sont choisis parmi : -OXₐ ,' 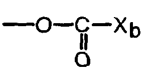
et -O-N=CX₁X₂, dans lesquels Xₐ, X_{b}, X₁ et X₂ sont indépendamment des radicaux alkyles, linéaires ou ramifiés, en C₁-C₁₀ ; étant entendu que X₁ et X₂ peuvent en outre représenter l'hydrogène et que Xₐ est un radical éventuellement substitué par (C₁-C₃)alcoxy.

Selon un mode de réalisation plus préféré de l'invention, a représente 0 ou 1, de telle sorte que le réticulant a pour formule : Si(Zi)₄ ou YSi(Zi)₃.

De préférence encore, les groupes Zi sont identiques entre eux.

Un groupe plus préféré de réticulant est formé en particulier par l'ensemble des organotrialcoxysilanes, des organotriacyloxysilanes, des organotrioximosilanes et des tétraalkylsilicates.

S'agissant des groupes Y, ont choisit plus particulièrement les radicaux : (C₁-C₆)alkyle ; (C₂-C₈)alcényle ; (C₃-C₈)cycloalkyle ; (C₆-C₁₀)aryle ; (C₆-C₁₅)alkylarylène ; ou (C₆-C₁₅)arylalkylène.

A titre d'exemple de groupes Y, on citera les radicaux méthyle, éthyle, vinyle ou phényle.

Les groupes Zi sont avantageusement choisis parmi (C₁-C₁₀)alcoxy ; (C₁-C₁₀)alcoxy-(C₁-C₃)alcoxy ; (C₁-C₁₀)alkylcarbonyloxy ; ou un groupe oxime -O-N=CX₁X₂ dans lequel X₁ et X₂ sont indépendamment H ou (C₁-C₁₀)alkyle.

De préférence, Zi représente méthoxy, éthoxy, propoxy, méthoxyéthoxy, acétoxy ou un groupe oxime.

A titre de constituant (c) spécialement préféré, on peut citer le (ou les) alkyltrialcoxysilane(s) de formule YSi(Zi)₃ dans laquelle Y est (C₁-C₆)alkyle ou (C₂-C₈)alcényle et Zi est (C₁-C₁₀) alcoxy.

Parmi ceux-ci, on peut citer le méthyltriméthoxysilane, le méthyltriéthoxysilane, l'éthyltriéthoxysilane et/ou le vinyltriméthoxysilane.

L'émulsion finale comprend de 0,1 à 10 parties en poids, pour cent parties en poids de la somme des constituants (a) + (a') + (b) + (c) + (d), du constituant (c), de préférence de 0,2 à 5 parties en poids, mieux de 0,5 à 3.

Le catalyseur de condensation (d) est choisi parmi ceux conventionnellement utilisés dans la technique pour catalyser la réticulation de résines du type (b) à l'aide d'agents de réticulation du type (c) définis ci-dessus.

Des exemples de catalyseurs utilisables dans le cadre de l'invention sont les sels organométalliques, et les titanates tels que l'orthotitanate de tétrabutyle. A titre de sel organométallique, on peut mentionner le naphténate de zirconium et l'octylate de zirconium.

Ledit catalyseur est de préférence un composé catalytique à l'étain, généralement un sel d'organoétain. Les sels d'organoétain utilisables sont décrits en particulier dans l'ouvrage de NOLL, Chemistry and Technology of Silicones Academic Press (1968), page 337. On peut également définir comme composé catalytique à l'étain, soit des distannoxanes, soit des polyorganostannoxanes, soit le produit de réaction d'un sel d'étain, en particulier d'un dicarboxylate d'étain sur du polysilicate d'éthyle, comme décrit dans le brevet US-A-3 862 919.

Le produit de réaction d'un silicate d'alkyle ou d'un alkyltrialcoxysilane sur le diacétate de dibutylétain comme décrit dans le brevet belge BE-A-842 305, peut convenir aussi.

Selon une autre possibilité, on a recours à un sel d'étain II, tel que SnCl₂ ou l'octoate stanneux.

De façon avantageuse, le catalyseur est le sel d'étain d'un acide organique, tels que le diacétate de dibutylétain, le dilaurate de dibutylétain, le dilaurate de dioctylétain, le dioctate de dibutylétain, le naphténate de zinc, le naphténate de cobalt, l'octylate de zinc, l'octylate de cobalt et le di(isomercaptoacétate) de dioctylétain.

Les sels d'étain préférés sont les bischélates d'étain (EP-A-147 323 et EP-A-235 049), les dicarboxylates de diorganoétain et, en particulier, les diversatates de dibutyl- ou de dioctylétain (brevet britannique GB-A-1 289 900, le diacétate de dibutyl- ou de dioctylétain, le dilaurate de dibutyl- ou de dioctylétain ou les produits d'hydrolyse des espèces précitées (par exemple les diorgano et polystannoxanes).

Le catalyseur (d) est généralement introduit dans l'émulsion à raison de 0,05 à 5 parties en poids, pour cent parties en poids de la somme des constituants (a) + (a') + (b) + (c) + (d), de préférence à raison de 0,08 à 3 parties en poids, et mieux encore de 0,1 à 2 parties en poids.

Le dilaurate de dioctylétain est tout particulièrement préféré.

La nature du tensioactif (e) sera facilement déterminée par l'homme du métier, l'objectif étant de préparer une émulsion stable.

Les tensioactifs anioniques, cationiques, non-ioniques et zwitterioniques peuvent être employés seuls ou en mélange.

A titre de tensioactif anionique, on peut mentionner les sels de métaux alcalins des acides hydrocarbonés aromatiques sulfoniques ou les sels de métaux alcalins d'acides alkylsulfuriques.

Les tensioactifs non-ioniques sont plus particulièrement préférés dans le cadre de l'invention. Parmi ceux-ci, on peut citer les éthers alkyliques ou aryliques de poly(oxyde d'alkylène), l'hexastéarate de sorbitan polyoxyéthyléné, l'oléate de sorbitan polyoxyéthyléné ayant un indice de saponification de 102 à 108 et un indice d'hydroxyle de 25 à 35 et les éthers de cétylstéaryle et de poly(oxyde d'éthylène).

A titre d'éther arylique de poly(oxyde d'alkylène), on peut mentionner les alkylphénols polyoxyéthylénés. A titre d'éther alkylique de poly(oxyde d'alkylène), on peut mentionner l'éther isodécylique de polyéthylèneglycol et l'éther triméthylnonylique de polyéthylèneglycol contenant de 3 à 15 unités d'oxyde d'éthylène par molécule.

On peut encore citer l'alcool isotridécylique éthoxylé, e.g. avec de 8 à 9 moles d'oxyde d'éthylène par mole d'alcool isotridécylique.

La quantité de tensioactif (e) est fonction du type de chacun des constituants en présence ainsi que de la nature même du tensioactif utilisé. En règle générale, l'émulsion comprend de 0,5 à 10% en poids de tensioactif (mieux encore de 0,5 à 5% en poids) et de 40 à 95% en poids d'eau (mieux encore de 45 à 90% en poids).

De façon avantageuse l'émulsion finale peut comprendre en outre un constituant (g) consistant dans au moins un agent réticulant hydrosoluble, notamment un silane, ledit réticulant étant porteur, par molécule, en plus d'au moins un groupe OH, d'au moins un groupe organique à fonction Fr, Fr représentant une fonction amino éventuellement substituée, époxy, acryloyle (-CH₂=CH-CO-) éventuellement substituée, méthacryloyle (-CH₂=C(CH₃)-CO-) éventuellement substituée, uréido (NH₂-CO-NH-) éventuellement substituée, thiol éventuellement substituée ou halogène.

Au sens de la présente invention, on doit entendre par hydrosolubilité, l'aptitude d'un produit à se dissoudre dans l'eau à une température de 25° C, à hauteur d'au moins 5% en poids.

Les substituants organiques éventuels du réticulant autres que le (ou les) groupe(s) OH et le (ou les) groupe(s) organique(s) à fonction Fr, sont : des radicaux alkyles, linéaires ou ramifiés, ayant de 1 à 6 atomes de carbone ; des radicaux cycloalkyles ayant de de 3 à 8 atomes de carbone ; des radicaux alcényles, linéaires ou ramifiés, ayant de 2 à 8 atomes de carbone ; des radicaux aryles ayant de 6 à 10 atomes de carbone ; des radicaux alkylarylènes ayant de 6 à 15 atomes de carbone ; ou des radicaux arylalkylènes ayant de 6 à 15 atomes de carbone.

Selon un mode de réalisation préféré de l'invention, Fr est une fonction amino éventuellement substituée.

Ainsi, un groupement organique à fonction Fr préféré est un groupement choisi parmi les formules :

-Rₐ-NR⁷R⁸

-R_{b}-NH-R_{c}-NR⁷R⁸

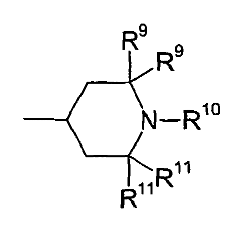

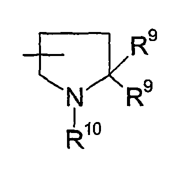

où Rₐ, R_{b}, R_{c}, R⁷, R⁸, R⁹, R¹⁰ et R¹¹ sont tels que définis ci-dessus à propos de la définition du constituant (b).

Selon un mode de réalisation plus préféré de l'invention, l'agent réticulant hydrosoluble a pour formule :

R⁸R⁷N-Rₐ-Si(OH)₃

dans laquelle Rₐ, R⁷ et R⁸ sont tels que définis ci-dessus. Encore plus préférablement, Rₐ représente (C₁-C₁₀)alkylène, et R⁷ et R⁸ représentent indépendamment un atome d'hydrogène ou un groupe (C₁-C₆)alkyle.

A titre d'exemple, on peut citer le 3-aminopropyltrihydroxysilane.

Ce constituant (g), quand il est présent dans l'émulsion, est utilisé à raison de 0,5 à 15 parties en poids pour cent parties en poids de la somme des constituants (a) + (a') + (b) + (c) + (d) + (g), de préférence à raison de 0,6 à 5 parties en poids, et mieux à raison de 0,8 à 3 parties en poids.

La présence du constituant (g) améliore notamment la durabilité de la composition lubrifiante.

L'émulsion peut contenir aussi un ou plusieurs ingrédients additionnels tels que par exemple des polymères filmogènes, des lubrifiants complémentaires, des agents anti-friction, des agents de coalescence, des agents mouillants ou dispersants, des charges minérales, des agents d'évacuation de l'air, des agents anti-mousse, des épaississants, des stabilisants, des conservateurs tels que des biocides et des antifongiques, en quantités pouvant varier considérablement, par exemple, entre 0,2 et 50% en poids de l'émulsion.

A titre de polymère filmogène, on peut citer par exemple les copolymères styrène-acrylique.

Des exemples d'épaississants sont les épaississants cellulosiques (carboxyméthylcellulose), acryliques, polyuréthane, les gommes hydrocolloïdales (gomme xanthane) et leurs mélanges.

En tant qu'agent de coalescence, on pourra utiliser les glycols et/ou les coupes pétrolières aliphatiques (fractions de distillation du pétrole).

Des agents mouillants ou dispersables utilisables dans le cadre de l'invention sont par exemple les phosphates et/ou les polyacryliques, tels que par exemple l'hexamétaphosphate de sodium et les polyacrylates de sodium.

Les compositions de l'invention peuvent être préparées de façon conventionnelle par mise en oeuvre des méthodes classiques de l'état de la technique, à partir d'un mélange préalable comprenant les constituants lipophiles (a), (a'), (b) et (c). L'objectif est d'aboutir à une émulsion dans laquelle l'huile non réactive, l'huile réactive et les constituants destinés à former le réseau élastomérique sont présents dans les mêmes particules huileuses.

L'émulsification peut être directe ou procéder par inversion.

Pour l'émulsification directe, le procédé consiste à mettre en émulsion dans une phase aqueuse contenant le tensioactif (e), un mélange des constituants (a), (a'), (b) et (c). On obtient directement une émulsion huile dans eau. Puis les constituants manquants peuvent être ajoutés, soit directement à l'émulsion (cas des constituants hydrosolubles), soit ultérieurement sous la forme d'émulsion (cas des constituants solubles dans la phase silicone). En variante, ces derniers peuvent aussi être ajoutés dans le mélange initial (a), (a'), (b), (c).

Ainsi, le catalyseur (d) et l'éventuel polymère filmogène peuvent être ajoutés, soit directement à la phase silicone avant émulsification, soit après formation de l'émulsion, sous la forme d'une émulsion additionnelle.

La granulométrie de l'émulsion obtenue précédemment peut être ajustée par les méthodes classiques connues de l'homme du métier, notamment en poursuivant l'agitation dans le réacteur pendant une durée adaptée. On vise notamment une granulométrie comprise entre 0,1 et 0,5 µm, de préférence entre 0,2 et 0,4 µm.

Dans le cas où l'on procède par inversion, le mode de réalisation préféré prévoit de préparer sous agitation un prémélange ne contenant qu'une faible proportion d'eau (contenant le tensioactif (e) et éventuellement des constituants hydrosolubles) et les constituants (a), (a'), (b), (c), de procéder à son inversion (par exemple par broyage), c'est-à-dire transformation du prémélange en émulsion huile dans eau, puis diluer cette émulsion avec l'eau restante, éventuellement additionnée d'un ou plusieurs constituants hydrosolubles. Le broyage permet avantageusement d'obtenir directement la granulométrie souhaitée, qui est de préférence comme vu supra à propos de l'émulsification directe.

D'ordinaire, les procédés de l'invention sont mis en oeuvre à température ambiante. De préférence, on limite l'élévation de température qui peut résulter des étapes de broyage ou d'agitation. Notamment, on choisit de rester en deçà des 60 ou 65° C. C'est notamment le cas lorsque, conformément au mode préféré de l'invention, on utilise des tensioactifs anioniques.

Le procédé de invention peut comprendre en outre une étape supplémentaire de chauffage de la composition lubrifiante obtenue, par exemple à une température allant de 30 à 40°C. Cette étape permet d'accélérer les processus de réticulation. Elle peut être remplacée par une étape de stockage de la composition lubrifiante à température ambiante (23°C) jusqu'à réticulation complète.

Les huiles et résines (a), (a') et (b) ainsi que les réticulants (c) et (g) sont disponibles dans le commerce ou facilement accessibles à l'homme du métier par mise en oeuvre de procédés classiques décrits dans la technique antérieure.

Lorsque la résine (b) ou le réticulant (c) sont fonctionnalisés, la fonctionnalisation est facilement réalisée par réaction de substitution ou d'addition appropriée.

L'invention a encore pour objet l'utilisation de la composition lubrifiante ainsi obtenue pour la lubrification d'articles divers.

Plus particulièrement, l'invention concerne l'utilisation de la composition lubrifiante pour la lubrification de la vessie de vulcanisation, de préférence en caoutchouc ou analogue et dilatable, lors du façonnage et de la vulcanisation de bandages pneumatiques ou semi-pneumatiques.

La composition lubrifiante de l'invention peut être appliquée de façon quelconque, et par exemple par pulvérisation, par brossage ou encore à l'aide d'une éponge ou d'un pinceau. Il est préférable d'opérer de façon à recouvrir l'article à revêtir d'une couche régulière de revêtement.

La lubrification de la vessie de vulcanisation utilisée lors du façonnage et de la vulcanisation de bandages pneumatiques ou semi-pneumatiques peut être réalisée de deux façons différentes.

Lors de la fabrication des bandages pneumatiques ou semi-pneumatiques, un bandage cru est placé dans un moule à bandages, une vessie dilatable est disposée dans le moule, le moule est fermé et la vessie est dilatée par application d'une pression interne de fluide chaud, de telle sorte que le bandage se trouve plaqué contre le moule, façonné et vulcanisé. Le moule est alors ouvert, la vessie est dégonflée et le bandage est récupéré, façonné et vulcanisé. Une même vessie est utilisée pour la fabrication d'environ quelques centaines de bandages.

La vessie en caoutchouc dilatable utilisée lors de la fabrication des bandages est initialement revêtue d'une composition lubrifiante selon l'invention.

Au départ, la lubrification de la vessie est directe. Ensuite, il intervient un phénomène d'épuisement de l'effet lubrifiant de cette vessie.

Dans cette phase ultérieure, c'est la surface interne du bandage (celle qui vient au contact de la vessie) qui est revêtue de la composition lubrifiante. Il y a régénération de la lubrification de la vessie en caoutchouc par transfert à partir du bandage.

De façon générale, les cycles de pressage du moule/dégagement de la vessie, mis en oeuvre lors de la fabrication des bandages se succèdent de la façon suivante :
- la vessie initialement revêtue de la composition lubrifiante (lubrification directe) et chauffée à 80-180°C, et de préférence à 130-170°C, est utilisée (sans revêtement ultérieur de la vessie, mais en réalisant un revêtement sur le premier bandage ou les deux premiers bandages) pendant de 5 à 10 cycles (chaque cycle aboutissant à la fabrication d'un bandage différent), puis
- les cycles suivants sont mis en oeuvre par utilisation de cette même vessie (pour laquelle le revêtement de lubrification est épuisé) à partir de bandages pneumatiques ou semi-pneumatiques qui sont alors à chaque fois revêtus de la composition lubrifiante de l'invention : la lubrification de la vessie a lieu en ce cas par transfert.

La présente invention concerne donc également l'utilisation de la composition lubrifiante pour la lubrification des bandages pneumatiques ou semi-pneumatiques crus, comportant ou non sur leur surface externe des éléments qui constitueront la bande de roulement externe destinée à venir au contact du sol.

La composition lubrifiante de l'invention ne comprend aucun constituant à liaison Si-H de telle sorte que le risque de dégagement d'hydrogène en cours de stockage ou de transport est nul.

La composition lubrifiante de l'invention présente en outre d'excellentes propriétés de glissement, de durabilité et d'élasticité.

La présente invention concerne encore les articles lubrifiés à l'aide de la composition lubrifiante susceptible d'être obtenue par la mise en ouvre du procédé qui vient d'être décrit précedemment.

Plus particulièrement, l'invention concerne :
- une vessie dilatable en caoutchouc revêtue sur sa surface externe d'une composition selon l'invention, pour le façonnage et la vulcanisation de bandages pneumatiques ou semi-pneumatiques ;
- une vessie en caoutchouc dilatable pouvant être obtenue par chauffage de la vessie dilatable définie ci-dessus, notamment à 80-180° C (de préférence 130-170° C), de façon à assurer la réticulation totale des constituants réticulables de l'émulsion ;
- un bandage pneumatique ou semi-pneumatique cru comportant ou non des éléments qui constitueront sa bande de roulement externe destinée à venir au contact du sol, revêtu sur sa surface interne d'une composition lubrifiante selon l'invention.

Suivant un deuxième mode de réalisation de l'invention, les émulsions huile dans eau selon l'invention sont cette fois telles que le rapport pondéral constituant (a)/constituant (a') se situe dans l'intervalle allant de 0 à 1, notamment de 0 à 0,7. Suivant une première modalité, l'émulsion l'huile dans eau servant de primaire comporte uniquement à titre d'huile, une huile (a') a groupement OH, une huile (a) n'étant pas présente. Suivant une autre modalité de réalisation de primaire, les deux types d'huile sont présents, et l'on préfère alors que le rapport pondéral constituant (a)/constituant (a') soit différent de 0, e.g. compris entre 0,1 et 1, notamment entre 0,1 et 0,7, de préférence entre 0,1 et 0,5 et de manière plus préférée entre 0,2 et 0,3.

Cette émulsion huile dans eau servant de primaire comporte les autres ingrédients (b), (c), (d), (e) et (f) décrits à propos de la composition lubrifiante. Globalement, les quantités de ces autres ingrédients sont identiques à celles décrites pour la composition lubrifiante. Notamment, la composition peut comprendre :
- de 55 à 98,85 parties en poids de la somme des constituants (a) + (a') ;
- de 1 à 30 parties en poids du constituant (b),
- de 0,1 à 10 parties en poids du constituant (c),
- de 0,05 à 5 parties en poids du constituant (d),
pour 100 parties en poids de la somme des constituants (a) + (a') + (b) + (c) + (d). Pour plus de détails sur les constituants, pouvant entrer dans la composition de l'émulsion huile dans eau servant de primaire, il est renvoyé à la description ci-dessus de ces constituants, qui a été faite pour la composition lubrifiante. De même, les constituants supplémentaires qui ont été proposés pour la composition lubrifiante, peuvent également être incorporés dans les mêmes conditions au primaire d'accrochage.

Le primaire peut comprendre en outre une ou plusieurs charges de renfort, notamment silice, e.g. silice de précipitation, de combustion ou naturelle, carbonate de calcium, argiles, mica ou encore un polymère organique de type polymère fluoré.

De même, le procédé de préparation de l'émulsion huile dans eau est identique au procédé de préparation décrit pour la préparation de la composition lubrifiante.

Ce primaire est notamment destiné à être appliqué sur une vessie dilatable, avant utilisation de la composition lubrifiante selon l'invention ou d'une composition lubrifiante usuelle. L'application de ce primaire peut être réalisée par les méthodes classiques telles que pulvérisation, brossage, application à l'aide d'une éponge ou d'un pinceau.

Ce primaire d'accrochage s'est révélé être particulièrement utile en combinaison avec des compositions lubrifiantes comportant des groupements (SiH) comme avec celles dépourvues de groupements (SiH), et plus particuilèrement avec les compositions lubrifiantes selon la présente invention.

La présente invention a donc également pour objet le procédé consistant à appliquer l'émulsion huile dans eau qui vient d'être décrite sur la surface d'une vessie dilatable, à titre de primaire d'accrochage. Après application, on procède à la réticulation par chauffage, notamment à 80-180° C, de préférence 130-170° C.

L'invention a également pour objet une vessie dilatable ou analogue ainsi revêtue.

Les exemples suivants qui illustrent l'invention témoignent des excellentes propriétés lubrifiantes des compositions de l'invention.

### EXEMPLE 1

Cet exemple illustre une composition lubrifiante selon l'invention comprenant un agent réticulant hydrosoluble (constituant (g)).

Le rapport pondéral constituant (a')/constituant(a) est choisi égal à 4.

La formulation de cette composition, qui est une émulsion huile dans eau, est donnée dans le tableau suivant.

**TABLEAU 1**

| Nature du constituant | Identification | Pourcentage en poids dans l'émulsion |
|---|---|---|
| Huile Ph/Me siloxane phénylée M-(D^{Ph/Me})₂₀-(D)₈₀-M de viscosité dynamique égale à 10⁻¹ Pa.s à 25° C ⁽¹⁾ | Constituant (a) | 31,94 |
| Polydiméthylsiloxane linéaire hydroxylé à terminaisons (CH₃)₂(OH)SiO_{1/2} de viscosité dynamique égale à 0,75 Pa.s à 25° C | Constituant (a') Rapport pondéral (a)/(a') = 4 | 7,98 |
| Résine MDT-OH ⁽²⁾ | Constituant (b) | 5,71 |
| Méthyltriéthoxysilane | Constituant (c) | 0,38 |
| Emulsion de dilaurate de dioctylétain ⁽³⁾ | Constituant (d) | 0,24 |
| Alcool isotridécylique polyéthoxylé ⁽⁴⁾ | Constituant (e) | 2,71 |
| NH2-(CH3)3-Si(OH)3 ⁽⁵⁾ | Constituant (g) | 2,42 |
| Agent anti-mousse | | 0,20 |
| Agent anti-oxydant | | 0,05 |
| Bactéricide | | 0,02 |
| Epaississant (gomme xanthane) | | 0,11 |
| Agents mouillants | | 0,30 |
| Eau distillée | Constituant (f) | 47,94 |
| | | 100 |

| | | |
|---|---|---|
| ⁽¹⁾huile siloxane phénylée : M = motif (CH₃)SiO_{1/2} D = motif (CH₃)₂SiO_{2/2} D^{Ph/Me} = motif (C₆H₅)(CH₃)SiO_{2/2} Ph = C₆H₅ ⁽²⁾Résine MDT présentant un taux d'hydroxylation de 0,5% en poids, un nombre moyen par molécule de radicaux organiques pour un atome de silicium de 1,5, une viscosité dynamique à 25° C de 1 Pa.s et les proportions suivantes de motifs siloxyles : M : 17% en mole D : 26% en mole T : 57% en mole. ⁽³⁾Emulsion de dilaurate de dioctylétain à 37,5% en poids dans l'eau préparée en utilisant de l'alcool polyvinylique en tant que tensioactif. ⁽⁴⁾ Mélange de 15% d'eau et de 85% d'alcool isotridécylique éthoxylé par 8 à 9 moles d'oxyde d'éthylène par mole d'alcool isotridécylique. ⁽⁵⁾ Solution aqueuse contenant 23% en poids de silane. | | |

La composition lubrifiante du tableau 1 a été préparée en deux étapes.

### Etape 1

Un mélange composé d'huile phénylée non réactive, d'huile polydiméthylsiloxane hydroxylée, de la résine MDT-OH, du méthyltriéthoxysilane, du tensioactif et d'une partie d'eau distillée (selon un rapport eau/tensioactif de 1,2, soit 2,35% en poids d'eau) est homogénéisé au préalable sous agitation modérée (50 tours/minute) pendant 15 minutes à température ambiante (23°C).

Le mélange ainsi obtenu est traité par broyage jusqu'à inversion de phase, à l'aide d'un broyeur Moritz^{®}, pour passer d'une phase fluide eau/huile à une phase épaisse huile/eau.

La dilution de la phase épaisse obtenue est réalisée sous agitation moyenne en 40 minutes, à l'aide d'une quantité d'eau distillée déterminée pour obtenir une émulsion dont la matière sèche est de 50% (soit 45,59% en poids d'eau). L'agent bactéricide et l'agent antioxydant sont ajoutés pendant la dilution.

### Etape 2

On ajoute à l'émulsion précédemment réalisée le silane (g) et le catalyseur (d), puis une homogénéisation sous agitation modérée est opérée pendant 10 minutes, suivie d'une filtration.

On ajoute ensuite à l'émulsion le biocide et l'antimousse, et on agite pendant 10 autres minutes. L'émulsion ainsi obtenue est caractérisée par une granulométrie moyenne de 0,4 µm.

La gomme xanthane et l'agent mouillant sont chargés dans un autre récipient, mélangés pendant 10 minutes sous agitation vive, puis ajoutés à l'émulsion précédemment réalisée. On agite encore, à vitesse modérée, pendant 30 minutes.

L'émulsion finale est caractérisée par une une proportion de matière sèche (60 min, 120° C) de 48,8% en poids.

### EXEMPLE 2

Cet exemple illustre une composition lubrifiante identique à celle de l'exemple 1 mais préparée en choisissant un rapport pondéral constituant(a)/constituant(a') égal à **2,3.**

L'émulsion obtenue est caractérisée par une granulométrie moyenne de 0,401 µm et une proportion de matière sèche (60 min, 120° C) de 48,6% en poids.

### EXEMPLE 3

Cet exemple illustre une composition lubrifiante identique à celle de l'exemple 1 mais préparée en choisissant un rapport pondéral constituant(a)/constituant(a') égal à **1,5.**

L'émulsion obtenue est caractérisée par une granulométrie moyenne de 0,398 µm et une proportion de matière sèche (60 min, 120° C) de 48,7% en poids.

### EXEMPLE 4

Cet exemple illustre une composition lubrifiante identique à celle de l'exemple 1 mais préparée en choisissant un rapport pondéral constituant(a)/constituant(a') égal à **9.**

L'émulsion obtenue est caractérisée par une granulométrie moyenne de 0,405 µm et une proportion de matière sèche (60 min, 120° C) de 48,8% en poids.

### EXEMPLE COMPARATIF 5

Cet exemple illustre une composition lubrifiante différant de l'exemple 1 par l'absence de l'huile Polydiméthylsiloxane linéaire hydroxylée. La composition de cette émulsion est donnée dans le tableau 5 suivant :

**TABLEAU 2 : composition lubrifiante 5**

| Nature du constituant | Identification | Pourcentage en poids dans l'émulsion dans |
|---|---|---|
| Huile siloxane phénylée M-(D^{Ph/Me})₂₀-(D)₈₀-M de viscosité dynamique égale à 10⁻¹ Pa.s à 25° C ⁽¹⁾ | Constituant (a") | 39,92 |
| Résine MDT-OH ⁽²⁾ | Constituant (b) | 5,71 |
| Méthyltriéthoxysilane | Constituant (c) | 0,38 |
| Emulsion de dilaurate de dioctylétain ⁽³⁾ | Constituant (d) | 0,24 |
| Alcool isotridécylique polyéthoxylé ⁽⁴⁾ | Constituant (e) | 2,71 |
| NH₂-(CH₃)₃-si(OH)₃ ⁽⁵⁾ | Constituant (g) | 2,42 |
| Agent anti-mousse | | 0,20 |
| Agent anti-oxydant | | 0,05 |
| Bactéricide | | 0,02 |
| Epaississant (gomme xanthane) | | 0,11 |
| Agent mouillant | | 0,30 |
| Eau distillée | | 47,94 |
| | | 100 |

| | | |
|---|---|---|
| Légendes ⁽¹⁾ à ⁽⁵⁾ : cf. au bas du tableau 1. | | |

Le procédé utilisé pour préparer la composition lubrifiante 5 est identique au procédé en deux étapes et décrit pour l'exemple 1.

L'émulsion obtenue est caractérisée par une granulométrie moyenne de 0,405 µm et une proportion de matière sèche (60 min, 120° C) de 48,9% en poids.

### EXEMPLE COMPARATIF 6

**TABLEAU 3**

| Composition selon FR-A-2 494 294 | Parties en poids |
|---|---|
| Polydiméthylsiloxane à groupes terminaux hydroxyles | 40,4 |
| Méthylhydrogénosiloxane (à 30%) | 175,0 |
| Acétate/stéarate de zinc (à 20 %) | 43,7 |
| Agent anti-mousse | 1,3 |
| Eau | 610,8 |

### RESULTATS

Les propriétés des compositions des exemples 1 à 6 ont été mesurées par évaluation des coefficients de friction et de la durabilité.

Un coefficient de friction faible reflète de bonnes propriétés de glissement.

Les tests de mesure des coefficients de friction et de la durabilité ont été adaptés à l'application de la composition lubrifiante sur vessie dilatable en caoutchouc.

### Test de glissement

L'objectif de ce test est d'apprécier le pouvoir glissant d'une composition lubrifiante placée à l'interface entre la vessie gonflable et la surface interne de l'enveloppe d'un pneumatique.

Ce test est réalisé en faisant glisser sur une surface de caoutchouc, dont la composition est celle de la vessie gonflable, un patin métallique de poids déterminé, sous lequel est fixé un film d'enveloppe de pneumatique (50 x 75 mm).

La surface de la vessie gonflable est préalablement traitée par la composition lubrifiante selon une procédure proche de celle utilisée en production, avec réticulation par chauffage à 165 °C.

Le coefficient de friction est mesuré à l'aide d'un tensiomètre (à la vitesse de 50 mm/min.). Dix passages successifs sont réalisés sur le même échantillon de vessie gonflable en changeant à chaque fois l'échantillon d'enveloppe de pneumatique.

Plus les valeurs du coefficient de friction sont faibles et meilleures seront les propriétés de glissement de la composition lubrifiante.

Les dix passages donnent des informations sur l'épuisement de la composition lubrifiante au cours de moulées successives.

Ce test de glissement est parfaitement représentatif des performances à atteindre sur l'outil industriel, c'est un premier critère de sélection.

### Test de durabilité

La durabilité d'une composition lubrifiante correspond au nombre de pneumatiques réalisés sans dégradation de la surface de la vessie gonflable. Un film de vessie gonflable, préalablement traité par la composition lubrifiante à évaluer, est pressé au contact d'un film d'enveloppe de pneumatique, non vulcanisé, selon une série de cycles de pressions et de températures simulant les étapes de fabrication d'un pneumatique sur l'outil industriel.

Le film d'enveloppe de pneumatique est remplacé à chaque moulée. Le test est terminé lorsque les deux surfaces en contact restent collées. La composition lubrifiante à la surface du film de la vessie gonflable est épuisé et ne joue plus le rôle d'interface lubrifiante.

Le tableau 4 suivant rapporte les coefficients de friction obtenus à chaque passage pour chacune des compositions des exemples 1 à 4, ainsi que celles des exemples comparatifs 5 et 6.

**TABLEAU 4**

| | | Ex. 1 | Ex. 2 | Ex. 3 | Ex. 4 | Ex.comp.5 | Ex. comp.6 |
|---|---|---|---|---|---|---|---|
| coefficient De friction | 1er passage | 0,03 | 0,18 | 0,46 | 0,04 | 0,07 | 0,11 |
| | 2^{ème} passage | 0,06 | 0,23 | 0,48 | 0,06 | 0,11 | 0,16 |
| | 3^{ème} passage | 0,08 | 0,24 | 0,51 | 0,07 | 0,17 | 0,21 |
| | 4^{ème} passage | 0,09 | 0,23 | 0,51 | 0,09 | 0,21 | 0,27 |
| | 5^{eme} passage | 0,10 | 0,26 | 0,52 | 0,11 | 0,23 | 0,38 |
| | 6^{ème} passage | 0,12 | 0,25 | 0,51 | 0,13 | 0,25 | 0,52 |
| | 7^{ème} passage | 0,13 | 0,28 | 0,53 | 0,16 | 0,28 | 0,62 |
| | 8^{ème} passage | 0,13 | 0,31 | 0,54 | 0,18 | 0,29 | 0,71 |
| | 9^{ème} passage | 0,14 | 0,30 | 0,57 | 0,29 | 0,34 | 0,77 |
| | 10^{ème} passage | 0,15 | 0,32 | 0,57 | 0,41 | 0,45 | 0,83 |

Le tableau 5 rapporte la durabilité des compositions des exemples 1 à 4 de l'invention, ainsi que celle des exemples comparatifs.

**TABLEAU 5**

| Exemple | Durabilité |
|---|---|
| Exemple 1 | >20 |
| Exemple 2 | >20 |
| Exemple 3 | >20 |
| Exemple 4 | 10 |
| Exemple comparatif 5 | 10 |
| Exemple comparatif 6 | 8 |

### Conclusion :

Les compositions des exemples 1 et 2 présentent les meilleurs compromis entre performances de glissement et durabilité. Les compositions des exemples 3 et 4 correspondent aux valeurs limites du ratio (a)/(a') où l'un des critères, performances de glissement ou durabilité, n'est pas optimal.

Les performances des compositions des exemples comparatifs sont en retrait par rapport aux compositions selon l'invention.

Enfin, les compositions selon l'invention (exemples 1 à 4) offrent une durabilité au moins doublée par rapport aux compositions selon WO-A-01 40417. La combinaison des huiles (a) et (a') dans les ratios selon l'invention permet d'obtenir des propriétés de glissement alliées à une durabilité en net progrès par rapport à l'art antérieur.

### EXEMPLE 7 :

Cet exemple illustre un primaire d'accrochage.

On a reproduit l'exemple 1 en choisissant un ratio (a)/(a') égal à 0,25. Comme pour les autres exemples, après réticulation sur la surface de caoutchouc, le test de glissement a été appliqué. Après 2 passages, le coefficient de friction était de 1,12.

Il doit être bien compris que l'invention définie par les revendications annexées n'est pas limitée aux modes de réalisation particuliers indiqués dans la description ci-dessus, mais en englobe les variantes qui ne sortent ni du cadre ni de l'esprit de la présente invention.

## Revendications

1. Composition, sous forme d'émulsion huile dans eau, à base de siloxane et ne dégageant pas d'hydrogène, comprenant :
(a) au moins une huile polyorganosiloxane linéaire non réactive aux propriétés lubrifiantes, présentant une viscosité dynamique de l'ordre de 5.10⁻² à 30.10² Pa.s à 25°C et consistant dans un homopolymère ou copolymère linéaire :
- dont, par molécule, les substituants organiques monovalents, identiques ou différents entre eux, liés aux atomes de silicium, sont choisis parmi les radicaux alkyles, cycoalkyles, alcényles, aryles, alkylarylènes et arylalkylènes,
- des radicaux aryles, alkylarylènes et/ou arylalkylènes étant de préférence présents ;
(a') au moins une huile polyorganosiloxane linéaire réactive comportant au moins deux groupements OH par molécule et présentant une viscosité dynamique allant de 5.10⁻² à 200 000, notamment de 5.10⁻² à 150 000, de préférence de 5.10⁻² à 30.10² Pa.s à 25°C ;
(b) au moins une résine polyorganosiloxane porteuse de substituants hydroxyles condensables et comportant au moins deux motifs siloxyles différents choisis parmi ceux de formule (R¹)₃SiO_{2/2} (M) ; (R¹)₂SiO_{2/2} (D) ; R¹SiO_{3/2} (T) et SiO_{4/2} (Q), l'un au moins de ces motifs étant un motif T ou Q, formules dans lesquelles R¹ représente un substituant organique monovalent, le nombre moyen par molécule de radicaux organiques R¹ pour un atome de silicium étant compris entre 1 et 2 ; et ladite résine présentant une teneur pondérale en substituants hydroxyles comprise entre 0,1 et 10% en poids, et, de préférence entre 0,2 et 5% en poids ;
(c) au moins un réticulant soluble dans la phase silicone comprenant au moins deux fonctions capables de réagir avec la résine polyorganosiloxane (b) ;
(d) au moins un catalyseur de condensation capable de catalyser la réaction du constituant (b) avec le constituant (c) ;
(e) au moins un tensioactif ; et
(f) de l'eau,
les quantités de tensioactif(s) et d'eau étant suffisantes pour l'obtention d'une émulsion huile-dans-eau,
le rapport pondéral constituant (a)/constituant (a') se situant dans l'intervalle allant de 2 à 6,
les constituants (a), (a'), (b) et (c) étant mélangés entre eux avant mise en émulsion.

2. Composition selon la revendication 1, **caractérisée en ce que** l'huile (a) comporte par molécule, au moins 1 ou 2 %, notamment de 5 à 50 %, de préférence de 8 à 35 % de radicaux aryles, alkylarylènes et/ou arylalkylènes

3. Composition selon la revendication 1 ou 2, **caractérisée en ce qu'**elle comprend :
- de 55 à 98,85 parties en poids de la somme des constituants (a) + (a') ;
- de 1 à 30 parties en poids du constituant (b),
- de 0,1 à 10 parties en poids du constituant (c);
- de 0,05 à 5 parties en poids du constituant (d),
pour 100 parties en poids de la somme des constituants (a) + (a') + (b) + (c) + (d).

4. Composition selon la revendication 1, 2 ou 3, **caractérisée en ce que** l'huile (a) comprend un polyorganosiloxane linéaire :
- constitué le long de chaque chaîne :
• des motifs de formule R²R³SiO_{2/2}, éventuellement associés à des motifs de formule (R²)₂SiO_{2/2},
• des motifs de formule (R³)₂SiO_{2/2}, éventuellement associés à des motifs de formule (R²)2SiO_{2/2} ,
• des motifs de formule R²R³SiO_{2/2} et des motifs de formule (R³)₂SiO_{2/2}, éventuellement associés à des motifs de formule (R²)₂SiO_{2/2} ,
- et bloqué à chaque extrémité de chaîne par un motif de formule (R⁴)₃SiO_{1/2} dont les radicaux R⁴, identiques ou différents, sont choisis parmi des radicaux R² et R³ ;
- où les radicaux R² et R³, substituants organiques monovalents des divers motifs siloxyles mentionnés supra, ont les définitions suivantes :
• les radicaux R², identiques ou différents entre eux, sont choisis parmi : les radicaux alkyles linéaires ou ramifiés en C₁-C₆ (tels que par exemple méthyle, éthyle, propyle, isopropyle, butyle, isobutyle, t-butyle, n-pentyle, n-hexyle), les radicaux cycloalkyles en C₃-C₈ (tels que par exemple cyclopentyle, cyclohexyle), et les radicaux alcényles linéaires ou ramifiés en C₂-C₈ (tels que par exemple vinyle, allyle),
• les radicaux R³ identiques ou différents entre eux, sont choisis parmi : les radicaux aryles en C₆-C₁₀ (tels que par exemple phényle, naphtyle), les radicaux alkylarylènes en C₆-C₁₅ (tels que par exemple tolyles, xylyle), les radicaux arylalkylènes en C₆-C₁₅ (tels que par exemple benzyle) ; et
- où au moins 1 ou 2 %, notamment de 5 à 50 %, et mieux de 8 à 35 %, en nombre des substituants R², R³ et R⁴ sont des radicaux aromatiques R³.

5. Composition selon la revendication 4, **caractérisée en ce que** l'huile (a) comprend un polyorganosiloxane linéaire :
- constitué le long de chaque chaîne :
• des motifs de formule R²R³SiO_{2/2} associés à des motifs de formule (R²)₂SiO_{2/2},
• des motifs de formule (R³)₂SiO_{2/2} associés à des motifs de formule (R²)₂SiO_{2/2} ;
- et bloqué à chaque extrémité de chaîne par un motif de formule (R²)₃SiO_{1/2} ;
- où les radicaux R² et R³ ont les définitions suivantes :
• les radicaux R² identiques ou différents entre eux, sont choisis parmi les radicaux méthyle, éthyle, propyle et isopropyle,
• les radicaux R³ identiques ou différents entre eux, sont choisis parmi les radicaux phényle, tolyles et benzyle ; et
- où au moins 1 ou 2 %, notamment de 5 à 50 %, et mieux de 8 à 35 %, en nombre des substituants R² et R³ sont des radicaux phényle, tolyles et/ou benzyle.

6. Composition selon la revendication 5, **caractérisée en ce que** l'huile (a) comprend un polyorganosiloxane linéaire ayant, par molécule, un rapport (en nombre) substituants aromatiques R³/Si au moins égal à 0,04, de préférence allant de 0,09 à 1 et mieux allant de 0,16 à 0,7.

7. Composition selon l'une quelconque des revendications 1 à 6, **caractérisée en ce que** l'huile (a') est une huile polyorganosiloxane linéaire portant des substituants organiques choisis parmi :
radicaux alkyles linéaires ou ramifiés ; radicaux alcényles linéaires ou ramifiés ; radicaux cycloalkyles ou cycloalcényles, radicaux cycloalkylalkylènes ou cycloalcénylalkylènes ; ces radicaux étant éventuellement substitués par des groupements -OH et/ou amino et/ou halogène et/ou cyano.

8. Composition selon la revendication 7, **caractérisée en ce que** l'huile (a') répond à la formule 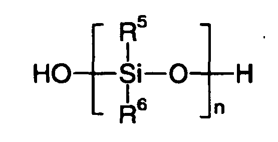 dans laquelle n est un entier supérieur ou égal à 10, R⁵ et R⁶, identiques ou différents, représentent : (C₁-C₆)alkyle ; (C₃-C₈)cycloalkyle ; (C₂-C₈)alcényle ; (C₅-C₈)cycloalcényle ; chacun des radicaux précités étant éventuellement substitué par un atome d'halogène ou un reste cyano.

9. Composition selon la revendication 8, **caractérisée en ce que** R⁵ et R⁶ sont indépendamment choisis parmi méthyle, éthyle, propyle, isopropyle, cyclohexyle, vinyle et 3,3,3-trifluoropropyle, 80% en nombre de ces radicaux étant de préférence des radicaux méthyle.

10. Composition selon la revendication 9, **caractérisée en ce que** l'huile (a') est un a,@-dihydroxypolydiméthylsiloxane.

11. Composition selon l'une quelconque des revendications 1 à 10, **caractérisée en ce que** l'huile (a) et/ou l'huile (a') a une viscosité dynamique à 25°C comprise entre 5.10⁻² et 30 Pa.s, de préférence entre 5.10⁻² et 5 Pa.s pour l'huile (a) et entre 0,1 et 5 Pa.s pour l'huile (a').

12. Composition selon l'une quelconque des revendications 1 à 11, **caractérisée en ce que** la résine (b) est une résine DT ou MDT hydroxylée comprenant au moins 20% en poids de motifs T et ayant une teneur pondérale en groupements hydroxyle allant de 0,1 à 10%, de préférence de 0,2 à 5%.

13. Composition selon l'une quelconque des revendications 1 à 12, **caractérisée en ce que** la résine (b) présente une viscosité dynamique à 25° C comprise entre 0,2 et 200 Pa.s, notamment entre 0,5 et 50 Pa.s, de préférence entre 0,8 et 5 Pa.s.

14. Composition selon l'une quelconque des revendications 1 à 13, **caractérisée en ce que** le constituant (c) est un réticulant de formule :
YₐSi(Zi)₄₋ₐ
dans laquelle :
- a est 0, 1 ou 2 ;
- Y est un groupe monovalent organique ; et
- les groupes Zi, identiques ou différents, sont choisis parmi : -OXₐ , 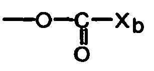
et -0-N=CX₁X₂, dans lesquels Xₐ, X_{b}, Xᵢ et X₂ sont indépendamment des radicaux alkyles, linéaires ou ramifiés, en C₁-C₁₀ ; étant entendu que X₁ et X₂ peuvent en outre représenter l'hydrogène et que Xₐ est un radical éventuellement substitué par (C₁-C₃)alcoxy.

15. Composition selon la revendication 14, **caractérisée en ce que** le constituant (c) est un alkyltrialcoxysilane de formule YSiZ₃ dans laquelle Y est alkyle, et Z est alcoxy.

16. Composition selon la revendication 14, **caractérisée en ce que** le constituant (c) est choisi parmi les organotrialcoxysilanes, les organotriacyloxysilanes, les organotrioximosilanes et les tétraalkylsilicates.

17. Composition selon l'une quelconque des revendications 1 à 16, **caractérisée en ce qu'**elle comprend en outre (g) de 0,5 à 15 parties en poids, pour cent parties en poids de la somme des constituants (a) + (a') + (b) + (c) + (d) + (g), d'un réticulant hydrosoluble qui est un silane porteur d'au moins un groupement organique à fonction Fᵣ, Fᵣ étant choisi parmi les fonctions amino éventuellement substituées, époxy, acroyl (CH₂=CH-CO) éventuellement substituées, méthacroyl (CH₂=C(CH₃)-CO-) éventuellement substituées, uréido (NH₂-CO-NH-) éventuellement substituées, thiol éventuellement substituées et halogène.

18. Composition selon la revendication 17, **caractérisée en ce que** le constituant (g) a pour formule R₂R,N-Rₐ-Si(OH)₃ dans laquelle Rₐ représente alkylène et R₁ et R₂ représentent un atome d'hydrogène ou un groupe alkyle.

19. Composition selon l'une quelconque des revendications 1 à 18, **caractérisée en ce qu'**elle comprend en outre un polymère filmogène et par exemple un copolymère styrène-acrylique.

20. Composition selon l'une quelconque des revendications 1 à 19, **caractérisée en ce qu'**elle comprend de 40 à 95% en poids d'eau.

21. Composition selon l'une quelconque des revendications 1 à 20, **caractérisée en ce qu'**elle comprend de 0,5 à 10% en poids de tensioactif.

22. Composition selon l'une quelconque des revendications 1 à 21, **caractérisée en ce que** le rapport pondéral constituant (a)/constituant (a') se situe dans l'intervalle allant de 3 à 5 et de préférence dans l'intervalle allant de 3,5 à 4,5.

23. Article revêtu d'une composition selon l'une quelconque des revendications 1 à 22.

24. Article pouvant être obtenu par chauffage d'un article selon la revendication 23.

25. Vessie dilatable en caoutchouc revêtue sur sa surface externe d'une composition selon l'une quelconque des revendications 1 à 22, pour le façonnage et la vulcanisation de bandages pneumatiques ou semi-pneumatiques.

26. Vessie dilatable en caoutchouc pouvant être obtenue par chauffage d'une vessie selon la revendication 25 à une température de 80 à 150° C.

27. Bandage pneumatique ou semi-pneumatique cru comportant des éléments qui constitueront sa bande de roulement externe destinée à venir au contact du sol, revêtu sur sa surface interne d'une composition selon la revendication 22.

28. Utilisation d'une composition lubrifiante selon la revendication 22 pour la lubrification d'un article.

29. Utilisation d'une composition lubrifiante selon la revendication 22 lors du façonnage et de la vulcanisation de bandages pneumatiques ou semi-pneumatiques, pour la lubrification de la vessie de vulcanisation dilatable.

30. Utilisation d'une composition selon la revendication 1, comme primaire d'accrochage sur une vessie dilatable.

## Claims

1. Composition, in the form of an oil-in-water emulsion, based on siloxane and which does not emit hydrogen, comprising:
(a) at least one nonreactive linear polyorganosiloxane oil with lubricating properties, having a dynamic viscosity of the order of 5x10⁻² to 30X10² Pa.s at 25°C and consisting of a linear homopolymer or copolymer:
- in which, per molecule, the monovalent organic substituents, which are identical or different from each other, linked to the silicon atoms are chosen from alkyl, cycloalkyl, alkenyl, aryl, alkylarylene and arylalkylene radicals,
- aryl, alkylarylene and/or arylalkylene radicals being preferably present,
(a') at least one reactive linear polyorganosiloxane oil containing
at least two OH groups per molecule and having a dynamic viscosity ranging from 5x10⁻² to 200 000, in particular from 5x10⁻² to 150 000, preferably from 5x10⁻² to 3OX10² Pa.s at 25°C;
(b) at least one polyorganosiloxane resin carrying condensable hydroxyl substituents and containing at least two different siloxyl units chosen from those of formula (R¹)₃SiO_{1/2} (M) ; (R¹) ₂SiO_{2/2} (D); R¹SiO_{3/2} (T) and SiO_{4/2} (Q) , at least one of these units being a T or Q unit, in which formulae R¹ represents a monovalent organic substituent, the average number per molecule of organic radicals R¹ for a silicon atom being between 1 and 2; and the said resin having a content by weight of hydroxyl substituents advantageously of between 0.1 and 10% by weight, and preferably between 0.2 and 5% by weight;
(c) at least one crosslinking agent which is soluble in the silicone phase comprising at least two functional groups capable of reacting with the polyorganosiloxane resin (b);
(d) at least one condensation catalyst capable of catalysing the reaction of the constituent (b) with the constituent (C);
(e) at least one surfactant; and
(f) water,
the quantities of surfactant(s) and of water being sufficient for producing an oil-in-water emulsion,
the constituent (a)/constituent (a') weight ratio being within the range from 2 to 6,
and the constituents (a), (a'), (b) and (c) being mixed with each other before emulsification.

2. Composition according to Claim 1, **characterized in that** the oil (a) contains per molecule, at least 1 or 2%, in particular from 5 to 50%, preferably from 8 to 35% of aryl, alkylarylene and/or arylalkylene radicals.

3. Composition according to claim 1 or 2, **characterized in that** it comprises:
- from 55 to 98.85 parts by weight of the sum of the constituents (a) + (a');
- from 1 to 30 parts by weight of the constituent (b),
- from 0.1 to 10 parts by weight of the constituent (c),
- from 0.05 to 5 parts by weight of the constituent (d),
per 100 parts by weight of the sum of the constituents (a) + (a') + (b) + (c) + (d) .

4. Composition according to Claim 1, 2 or 3, **characterized in that** the oil (a) comprises a linear polyorganosiloxane:
- consisting along each chain:
• of the units of formula R²R³SiO_{2/2}, optionally combined with units of formula (R²)SiO_{2/2},
• of the units of formula (R³)zSiO_{2/2}, optionally combined with units of formula (R²)₂SiO_{2/2} ,
• of the units of formula R²R³SiO_{2/2} and units of formula (R³)₂SiO_{2/2}, optionally combined with units of formula (R²)₂SiO_{2/2} ,
- and blocked at each chain end with a unit of formula (R⁴)₃SiO_{1/2} in which the radicals R⁴, which are identical or different, are chosen from the radicals R² and R³ ;
- where the radicals R² and R³, monovalent organic substituents of the various siloxyl units mentioned above, have the following definitions:
• the radicals R², which are identical to or different from each other, are chosen from: linear or branched C₁-C₆ alkyl radicals (such as for example methyl, ethyl, propyl, isopropyl, butyl, isobutyl, t-butyl, n-pentyl, n-hexyl), C₃-C₈ cycloalkyl radicals (such as for example cyclopentyl, Cyclohexyl), and linear or branched C₂-C₈ alkenyl radicals (such as for example vinyl, allyl),
• the radicals R³, which are identical to or different from each other, are chosen from: C₆-C₁₀ aryl radicals (such as for example phenol, naphthyl) , C₆-C₁₅ alkylarylene radicals (such as for example tolyl, xylyl), C₆-C₁₅ arylalkylene radicals (such as for example benzyl); and
- where at least 1 or 2%, in particular from 5 to 50%, and better still from 8 to 35%, in numerical terms, of the substituents R², R³ and R⁴ are aromatic radicals R³.

5. Composition according to Claim 4, **characterized in that** the oil (a) comprises a linear polyorganosiloxane:
- consisting along each chain:
• of the units of formula R²R³SiO_{2/2} combined with units of formula (R²)₂SiO_{2/2},
• of the units of formula (R³)₂SiO_{2/2} combined with units of formula (R²)₂SiO2/2;
- and blocked at each chain end by a unit of formula (R²)₃SiO_{1/2};
- where the radicals R² and R³ have the following definitions:
• the radicals R², which are identical to or different from each other, are chosen from the methyl, ethyl, propyl and isopropyl radicals,
• the radicals R³, which are identical to or different from each other, are chosen from the phenyl, tolyl and benzyl radicals; and
- where at least 1 or 2%, in particular from 5 to 50%, and better still from 8 to 35%, in numerical terms, of the substituents R² and R³ are phenyl, tolyl and/or benzyl radicals.

6. Composition according to Claim 5, **characterized in that** the oil (a) comprises a linear polyorganosiloxane having, per molecule, an aromatic substituents R³/Si ratio (in numerical terms) at least equal to 0.04, preferably ranging from 0.09 to 1, and better still ranging from 0.16 to 0.7.

7. Composition according to any one of Claims 1 to 6, **characterized in that** the oil (a') is a linear polyorganosiloxane oil carrying organic substituents chosen from:
linear or branched alkyl radicals; linear or branched alkenyl radicals; cycloalkyl or cycloalkenyl radicals, cycloalkylalkylene or cycloalkenylalkylene radicals; these radicals being optionally substituted with -OH and/or amino and/or halogen and/or cyano groups.

8. Composition according to Claim 7, **characterized in that** the oil (a') corresponds to formula 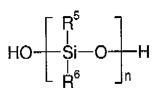 in which n is an integer greater than or equal to 10, R⁵ and R⁶, which are identical or different, represent: (C₁-C₆) alkyl; (c₃-c₈)cycloalkyl; (C₂-C₈)alkenyl; (C₃-C₈)cycloalkenyl, each of the abovementioned radicals being optionally substituted with a halogen atom or a cyano residue.

9. Composition according to Claim 8, **characterized in that** R⁵ and R⁶ are chosen independently from methyl, ethyl, propyl, isopropyl, cyclohexyl, vinyl and 3,3,3-trifluoropropyl, 80% in numerical terms of these radicals being preferably methyl radicals.

10. Composition according to Claim 9, **characterized in that** the oil (a') is an α,ω-dihydroxypolydimethylsiloxane.

11. Composition according to any one of Claims 1 to 10, **characterized in that** the oil (a) and/or the oil (a') has a dynamic viscosity at 25°C of between 5x10⁻² and 30 Pa.s, preferably between 5×10⁻² and 5 Pa.s for the oil (a) and between 0.1 and 5 Pa.s for the oil (a').

12. Composition according to any one of Claims 1 to 11, **characterized in that** the resin (b) is a hydroxylated DT or MDT resin comprising at least 20% by weight of T units and having a hydroxyl group content by weight ranging from 0.1 to 10%, preferably from 0.2 to 5%.

13. Composition according to any one of Claims 1 to 12, **characterized in that** the resin (b) has a dynamic viscosity at 25°C of between 0.2 and 200 Pa.s, in particular between 0.5 and 50 Pa.s, preferably between 0.8 and 5 Pa.s.

14. Composition according to any one of Claims 1 to 13, **characterized in that** the constituent (c) is a crosslinking agent of formula:
YₐSi(Zi)₄₋ₐ
in which:
- a is 0, 1 or 2;
- Y is a monovalent organic group; and
- the groups Zi, which are identical or different, are chosen from: -OXₐ , 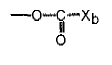
and -O-N=CX₁X₂, in which Xₐ, X_{b}, X₁ and X₂ are independently linear or branched C₁-C₁₀ alkyl radicals; it being understood that X₁ and X₂ may additionally represent hydrogen and that Xₐ is a radical which is optionally substituted with (C₁-C₃)alkoxy.

15. Composition according to Claim 14, **characterized in that** the constituent (c) is an alkyltrialkoxysilane of formula YSiZ₃ in which Y is alkyl, and Z is alkoxy.

16. Composition according to Claim 14, **characterized in that** the constituent (c) is chosen from organotrialkoxysilanes, organotriacyloxysilanes, organotrioximosilanes and tetraalkyl silicates.

17. Composition according to any one of Claims 1 to 16, **characterized in that** it comprises in addition (g) from 0.5 to 15 parts by weight, per hundred parts by weight of the sum of the constituents (a) + (a') + (b) + (c) + (d) + (g), of a water-soluble crosslinking agent which is a silane carrying at least one organic group with a functional group Fᵣ, Fᵣ being chosen from optionally substituted amino functional groups, epoxy functional groups, optionally substituted acroyl (CH₂=CH-CO) functional groups, optionally substituted methacroyl (CH₂=C(CH₃)-CO-) functional groups, optionally substituted ureido (NH₂-CO-NH-) functional groups, optionally substituted thiol functional groups and a halogen atom.

18. Compositions according to Claim 17, **characterized in that** the constituent (g) has the formula R₂R₁N-Rₐ-Si(OH)₃ in which Rₐ represents alkylene and R₁ and R₂ represent a hydrogen atom or an alkyl group.

19. Composition according to any one of Claims 1 to 18, **characterized in that** it additionally comprises a film-forming polymer and for example a styrene-acrylic copolymer.

20. Composition according to any one of Claims 1 to 19, **characterized in that** it comprises from 40 to 95% by weight of water.

21. Composition according to any one of Claims 1 to 20, **characterized in that** it comprises from 0.5 to 10% by weight of surfactant.

22. Composition according to any one of Claims 1 to 21, **characterized in that** the constituent (a) constituent (a') weight ratio is in the range from 3 to 5 and preferably in the range from 3.5 to 4.5.

23. Article coated with a composition according to any one of Claims 1 to 22.

24. Article which may be obtained by heating an article according to Claim 23.

25. Inflatable rubber bladder coated on its outer surface with a composition according to any one of Claims 1 to 22, for forming and curing pneumatic or semi-pneumatic tyres.

26. Inflatable rubber bladder which may be obtained by heating a bladder according to Claim 25 to a temperature of 80 to 150°C.

27. Raw pneumatic or semipneumatic tyre containing components which will constitute its outer tread intended to come into contact with the ground, coated on its inner surface with a composition according to Claim 22.

28. Use of a lubricating composition according to claim 22 for the lubrication of an article.

29. Use of a lubricating composition according to Claim 22 during the forming and curing of pneumatic or semipneumatic tyres, for lubricating the inflatable curing bladder.

30. Use of a composition according to Claim 1, as bonding primer on an inflatable bladder.

## Patentansprüche

1. Zusammensetzung, die in Form einer Öl-in-Wasser-Emulsion vorliegt, auf Siloxan basiert und keinen Wasserstoff entwickelt, umfassend:
(a) mindestens ein nichtreaktives lineares Polyorganosiloxanöl mit schmierenden Eigenschaften, das eine dynamische Viskosität von etwa 5.10⁻² bis 30.10² Pa.s bei 25°C aufweist und aus einem linearen Homopolymer oder Copolymer besteht:
- in welchem die gleichen oder voneinander verschiedenen einwertigen organischen Substituenten, die an Siliciumatome gebunden sind, pro Molekül unter Alkyl-, Cycloalkyl-, Alkenyl-, Aryl-, Alkylarylen- und Arylalkylenresten ausgewählt sind,
- wobei vorzugsweise Aryl-, Alkylarylen- und/oder Arylalkylenreste vorliegen;
(a') mindestens ein reaktives lineares Polyorganosiloxanöl, das mindestens zwei OH-Gruppen pro Molekül enthält und eine dynamische Viskosität von etwa 5.10⁻² bis 200 000 Pa.s, inbesondere 5.10⁻² bis 150 000 Pa.s und vorzugsweise 5.10⁻² bis 30.10² Pa.s bei 25°C aufweist;
(b) mindestens ein Polyorganosiloxanharz, das kondensierbare Hydroxylsubstituenten trägt und mindestens zwei verschiedene Siloxyleinheiten, ausgewählt unter denjenigen der Formel (R¹)₃SiO_{1/2} (M); (R¹)₂SiO_{2/2} (D); R¹SiO_{3/2} (T) und SiO_{4/2} (Q), enthält, wobei mindestens eine dieser Einheiten eine T- oder Q-Einheit ist, wobei in den Formeln R¹ für einen einwertigen organischen Substituenten steht, wobei die durchschnittliche Zahl organischer Reste R¹ für ein Siliciumatom pro Molekül zwischen 1 und 2 liegt; und das Harz einen Gewichtsanteil an Hydroxylsubstituenten zwischen 0,1 und 10 Gew.-% und vorzugsweise zwischen 0,2 und 5 Gew.-% aufweist;
(c) mindestens einen Vernetzer, der in der silikonphase löslich ist und mindestens zwei Funktionen umfaßt, die mit dem Polyorganosiloxanharz (b) reagieren können;
(d) mindestens einen Kondensationskatalysator, der zur Katalyse der Realtion von Bestandteil (b) mit Bestandteil (c) befähigt ist;
(e) mindestens ein Tensid und
(f) Wasser,
wobei die Mengen an Tensid(en) und Wasser zum Erhalt einer Öl-in-Wasser-Emulsion ausreichen,
wobei das Gewichtsverhältnis von Bestandteil (a) zu Bestandteil (a') im Bereich von 2 bis 6 liegt,
wobei die Bestandteile (a), (a'), (b) und (c) vor dem Emulgieren miteinander gemischt werden.

2. Zusammensetzung nach Anspruch 1, **dadurch gekennzeichnet, daß** das Öl (a) pro Molekül mindestens 1 oder 2%, insbesondere 5 bis 50% und vorzugsweise 8 bis 35% Aryl-, Alkylarylen- oder Arylalkylenreste enthält.

3. Zusammensetzung nach Anspruch 1 oder 2, **dadurch gekennzeichnet, daß** sie:
- 55 bis 98,85 Gewichtsteile der Summe der Bestandteile (a) und (a'),
- 1 bis 30 Gewichtsteile des Bestandteils (b),
- 0,1 bis 10 Gewichtsteile des Bestandteils (c) und
- 0,05 bis 5 Gewichtsteile des Bestandteils (d) pro 100 Gewichtsteile der Summe der Bestandteile (a) + (a') + (b) zur (c) + (d) umfaßt.

4. Zusammensetzung nach Anspruch 1, 2 oder 3, **dadurch gekennzeichnet, daß** das Öl (a) ein lineares Polyorganosiloxan umfaßt:
- das entlang jeder Kette aus:
• Einheiten der Formel R²R³SiO_{2/2}, gegebenenfalls in Kombination mit Einheiten der Formel (R²)₂SiO_{2/2},
• Einheiten der Formel (R³)₂SiO_{2/2}, gegebenenfalls in Kombination mit Einheiten der Formel (R²)₂SiO_{2/2},
• Einheiten der Formel R²R³SiO_{2/2} und Einheiten der Formel (R³)₂SiO_{2/2}, gegebenenfalls in Kombination mit Einheiten der Formel (R²)₂SiO_{2/2} besteht
- und an jedem Kettenende durch eine Einheit der Formel (R⁴)₃SiO_{1/2}, worin die Reste R⁴ gleich oder verschieden sind und unter den Resten R² und R³ ausgewählt sind, blockiert ist;
- wobei die Reste R² und R³, einwertige organische Substituenten der verschiedenen oben aufgeführten siloxyleinheiten, die folgenden Definitionen besitzen:
• die Reste R², die gleich oder voneinander verschieden sind, sind ausgewählt unter: linearen oder verzweigten C₁-C₆-Alkylresten (wie beispielsweise Methyl, Ethyl, Propyl, Isopropyl, Butyl, Isobutyl, t-Butyl, n-Pentyl, n-Hexyl), C₃-C₈-Cycloalkylresten (wie beispielsweise Cyclopentyl, Cyclohexyl) und linearen oder verzweigten C₂-C₈-Alkenylresten (wie beispielsweise Vinyl, Allyl),
• die Reste R³, die gleich oder voneinander verschieden sind, sind ausgewählt unter: C₆-C₁₀-Arylresten (wie beispielsweise Phenyl, Naphthyl), C₆-C₁₅-Alkylarylenresten (wie beispielsweise Tolyl, Xylyl) und C₆-C₁₅-Arylalkylenresten (wie beispielsweise Benzyl); und
- wobei mindestens 1 oder 2 Zahlen-%, insbesondere 5 bis 50 Zahlen-% und noch besser 8 bis 35 Zahlen-% der Substituenten R², R³ und R⁴ aromatische Reste R³ sind.

5. Zusammensetzung nach Anspruch 4, **dadurch gekennzeichnet, daß** das Öl (a) ein lineares Polyorganosiloxan umfaßt:
- das entlang jeder Kette aus:
• Einheiten der Formel R²R³SiO_{2/2} in Kombination mit Einheiten der Formel (R²)₂SiO_{2/2},
• Einheiten der Formel (R³)₂SiO_{2/2} in Kombination mit Einheiten der Formel (R²)₂SiO_{2/2} besteht
- und an jedem Kettenende durch eine Einheit der Formel (R²)₃SiO_{1/2} blockiert ist;
- wobei die Reste R² und R³ die folgenden Definitionen besitzen:
• die Reste R², die gleich oder voneinander verschieden sind, sind ausgewählt unter Methyl-, Ethyl-, Propyl- und Isopropylresten,
• die Reste R³, die gleich oder voneinander verschieden sind, sind ausgewählt unter Phenyl-, Tolyl- und Benzylresten; und
- wobei mindestens 1 oder 2 Zahlen-%, insbesondere 5 bis 50 zahlen-% und noch besser 8 bis 35 Mahlen-% der Substituenten R² und R³ Phenyl-, Tolyl- und/oder Benzylreste sind.

6. Zusammensetzung nach Anspruch 5, **dadurch gekennzeichnet, daß** das Öl (a) ein lineares Polyorganosiloxan, das pro Molekül ein (zahlenbezogenes) Verhältnis von aromatischen Substituenten R³ zu Si von mindestens 0,04, vorzugsweise von 0,09 bis 1 und noch besser von 0,16 bis 0,7 aufweist, umfaßt.

7. Zusammensetzung nach einem der Ansprüche 1 bis 6, **dadurch gekennzeichnet, daß** es sich bei dem Öl (a') um ein lineares Polyorganosiloxan handelt, das organische Substituenten trägt, die ausgewählt sind unter:
linearen oder verzweigten Alkylresten; linearen oder verzweigten Alkenylresten; Cycloalkyl- oder Cycloalkenylresten, Cycloalkylalkylen- oder Cycloalkenylalkylenresten; wobei diese Reste gegebenenfalls durch -OH- und/oder Amino- und/oder Halogen- und/oder Cyanogruppen substituiert sind.

8. Zusammensetzung nach Anspruch 7, **dadurch gekennzeichnet, daß** das Öl (a') der Formel 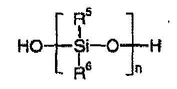 worin n für eine ganze Zahl größer gleich 10 steht und R⁵ und R⁶ gleich oder verschieden sind und für (C₁-C₆)-Alkyl; (C₃-C₈)-Cycloalkyl; (C₂-C₈)-Alkenyl; (C₅-C₈)-Cycloalkenyl stehen; wobei jeder der obigen Reste gegebenenfalls durch ein Halogenatom oder einen Cyanorest substituiert ist, entspricht.

9. Zusammensetzung nach Anspruch 8, **dadurch gekennzeichnet, daß** R⁵ und R⁶ unabhängig voneinander unter Methyl, Ethyl, Propyl, Isopropyl, Cyclohexyl, Vinyl und 3,3,3-Trifluorpropyl ausgewählt sind, wobei vorzugsweise 80 Zahlen-% dieser Reste Methylreste sind.

10. Zusammensetzung nach Anspruch 9, **dadurch gekennzeichnet, daß** es sich bei dem Öl (a') um ein α,ω-Dihydroxypolydimethylsiloxan handelt.

11. Zusammensetzung nach einem der Ansprüche 1 bis 10, **dadurch gekennzeichnet, daß** das Öl (a) und/oder das Öl (a') eine dynamische Viskosität bei 25°C zwischen 5.10⁻² und 30 Pa.s, vorzugsweise zwischen 5.10⁻² und 5 Pa.s für das Öl (a) und zwischen 0,1 und 5 Pa.s für das Öl (a'), aufweist.

12. Zusammensetzung nach einem der Ansprüche 1 bis 11, **dadurch gekennzeichnet, daß** es sich bei dem Harz (b) um ein hydroxyliertes DT- oder MDT-Harz mit mindestens 20 Gew.-% T-Einheiten und einem Gewichtsanteil an Hydroxylgruppen von 0,1 bis 10% und vorzugsweise 0,2 bis 5% handelt.

13. Zusammensetzung nach einem der Ansprüche 1 bis 12, **dadurch gekennzeichnet, daß** das Harz (b) eine dynamische Viskosität bei 25°C zwischen 0,2 und 200 Pa.s, insbesondere zwischen 0,5 und 50 Pa.s und vorzugsweise zwischen 0,8 und 5 Pa.s aufweist.

14. Zusammensetzung nach einem der Ansprüche 1 bis 13, **dadurch gekennzeichnet, daß** es sich bei dem Bestandteil (c) um einen Vernetzer der Formel:
YₐSi(Zi)₄₋ₐ
worin:
- a für 0, 1 oder 2 steht;
- Y für eine einwertige organische Gruppe steht und
- die Gruppen Zi gleich oder verschieden sind und unter -OXₐ, 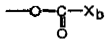 und -O-N=CX₁X₂ ausgewählt sind, worin Xₐ, X_{b}, X₁ und X₂ unabhängig voneinander für lineare oder verzweigte C₁-C₁₀-Alkylreste stehen, mit der Maßgabe, daß X₁ und X₂ außerdem für Wasserstoff stehen können und Xₐ für einen gegebenenfalls durch (C₁-C₃)-Alkoxy substituierten Rest steht;
handelt.

15. Zusammensetzung nach Anspruch 14, **dadurch gekennzeichnet, daß** es sich bei dem Bestandteil (c) um ein Alkyltrialkoxysilan der Formel YSiZ₃, worin Y für Alkyl steht und Z für Alkoxy steht, handelt.

16. Zusammensetzung nach Anspruch 14, **dadurch gekennzeichnet, daß** der Bestandteil (c) unter Organotrialkoxysilanen, Organotriacyloxysilanen, Organotrioximosilanen und Tetraalkylsilicaten ausgewählt ist.

17. Zusammensetzung nach einem der Ansprüche 1 bis 16, **dadurch gekennzeichnet, daß** sie außerdem (g) 0,5 bis 15 Gewichtsteile, pro hundert Gewichtsteile der Summe der Bestandteile (a) + (a') + (b) + (c) + (d) + (g), eines wasserlöslichen Vernetzers umfaßt, bei dem es sich um ein Silan mit mindestens einer organischen Gruppe mit einer Punktion Fᵣ handelt, wobei Fᵣ unter gegebenenfalls substituierten Amino-, Epoxid-, gegebenenfalls substituierten Acroyl- (CH₂=CH-CO-), gegebenenfalls substituierten Methacroyl- (CF₂=C(CH₃)-CO-), gegebenenfalls substituierten Ureido- (NH₂-CO-NH-), gegebenenfalls substituierten Thiol- und Halogengruppen ausgewählt ist.

18. zusammensetzung nach Anspruch 17, **dadurch gekennzeichnet, daß** der Bestandteil (g) die Formel R₂R₁N-Rₐ-Si(OH)₃ aufweist, worin Rₐ für Alkylen steht und R₁ und R₂ für ein Wasserstoffatom oder eine Alkylgruppe stehen.

19. Zusammensetzung nach einem der Ansprüche 1 bis 18, **dadurch gekennzeichnet, daß** sie außerdem ein filmbildendes Polymer und beispielsweise ein Styrol-Acryl-Copolymer umfaßt.

20. zusammensetzung nach einem der Ansprüche 1 bis 19, **dadurch gekennzeichnet, daß** sie 40 bis 95 Gew.-% Wasser umfaßt.

21. Zusammensetzung nach einem der Ansprüche 1 bis 20, **dadurch gekennzeichnet, daß** sie 0,5 bis 10 Gew.-% Tensid umfaßt.

22. Zusammensetzung nach einem der Ansprüche 1 bis 21, **dadurch gekennzeichnet, daß** das Gewichtsverhältnis von Bestandteil (a) zu Bestandteil (a') im Bereich von 3 bis 5 und vorzugsweise im Intervall von 3,5 bis 4,5 liegt.

23. Gegenstand, der mit einer Zusammensetzung nach einem der Ansprüche 1 bis 22 überzogen ist.

24. Gegenstand, der durch Erhitzen eines Gegenstands nach Anspruch 23 erhältlich ist.

25. Dehnbarer Kautschukbalg, der auf seiner Außenfläche mit einer Zusammensetzung nach einem der Ansprüche 1 bis 22 überzogen ist, zum Formen und Vulkanisieren von Luft- und Hohlkammerreifen.

26. Dehnbarer Kautschukbalg, der durch Erhitzen eines Balgs nach Anspruch 25 auf eine Temperatur von 80 bis 150°C erhältlich ist.

27. Luft- und Hohlkammerreifenrohling, der Elemente, die die für den Bodenkontakt bestimmte Lauffläche des Reifens bilden werden, aufweist und auf seiner Innenfläche mit einer Zusammensetzung nach Anspruch 22 überzogen ist.

28. Verwendung einer Schmiermittelzusammensetzung nach Anspruch 22 zum Schmieren eines Gegenstands.

29. Verwendung einer Schmiermittelzusammensetzung nach Anspruch 22 beim Formen und Vulkanisieren von Luft- und Hohlkammerreifen zum Schmieren des dehnbaren Vulkanisationsbalgs.

30. Verwendung einer Zusammensetzung nach Anspruch 1 als Haftgrundierung für einen dehnbaren Balg.
